(19)

**Europäisches Patentamt**
**European Patent Office**
**Office européen des brevets**

(11) **EP 4 311 013 A2**

(12) **EUROPEAN PATENT APPLICATION**

(43) Date of publication:
**24.01.2024  Bulletin 2024/04**

(21) Application number: **23215214.0**

(22) Date of filing: **19.01.2022**

(51) International Patent Classification (IPC):
***H01M 50/534*** *(2021.01)*

(52) Cooperative Patent Classification (CPC):
**H01M 10/0431; H01M 50/107; H01M 50/152;**
**H01M 50/167; H01M 50/179; H01M 50/184;**
**H01M 50/186; H01M 50/188; H01M 50/534;**
**H01M 50/536; H01M 50/538; H01M 50/545;**
**H01M 50/586; H01M 50/593;** H01M 50/213; (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **19.01.2021  KR 20210007278**
**19.02.2021  KR 20210022894**
**19.02.2021  KR 20210022891**
**19.02.2021  KR 20210022897**
**19.02.2021  KR 20210022881**
**23.02.2021  KR 20210024424**
**08.03.2021  KR 20210030300**
**08.03.2021  KR 20210030291**
**09.04.2021  KR 20210046798**
**04.05.2021  KR 20210058183**
**14.06.2021  KR 20210077046**
**28.06.2021  KR 20210084326**
**01.10.2021  KR 20210131225**
**01.10.2021  KR 20210131208**
**01.10.2021  KR 20210131205**
**01.10.2021  KR 20210131207**
**01.10.2021  KR 20210131215**
**14.10.2021  KR 20210137001**
**15.10.2021  KR 20210137856**
**22.10.2021  KR 20210142196**
**09.11.2021  KR 20210153472**
**19.11.2021  KR 20210160823**
**24.11.2021  KR 20210163809**
**26.11.2021  KR 20210165866**
**03.12.2021  KR 20210172446**
**10.12.2021  KR 20210177091**
**31.12.2021  KR 20210194611**
**31.12.2021  KR 20210194612**
**31.12.2021  KR 20210194572**
**31.12.2021  KR 20210194593**
**31.12.2021  KR 20210194610**
**05.01.2022  KR 20220001802**

(62) Document number(s) of the earlier application(s) in
accordance with Art. 76 EPC:
**22152250.1 / 4 047 703**

(71) Applicant: **LG Energy Solution, Ltd.**
**Seoul 07335 (KR)**

(72) Inventors:
• **MIN, Geon-Woo**
  07335 Seoul (KR)
• **JO, Min-Ki**
  07335 Seoul (KR)
• **KIM, Do-Gyun**
  07335 Seoul (KR)
• **KIM, Jae-Woong**
  07335 Seoul (KR)
• **HWANGBO, Kwang-Su**
  07335 Seoul (KR)
• **PARK, Jong-Sik**
  07335 Seoul (KR)
• **LIM, Jae-Won**
  07355 Seoul (KR)
• **CHOE, Yu-Sung**
  07335 Seoul (KR)
• **KIM, Hak-Kyun**
  07335 Seoul (KR)
• **LEE, Je-Jun**
  07335 Seoul (KR)
• **LEE, Byoung-Gu**
  07335 Seoul (KR)
• **RYU, Duk-Hyun**
  07335 Seoul (KR)
• **LEE, Kwan-Hee**
  07335 Seoul (KR)
• **LEE, Jae-Eun**
  07335 Seoul (KR)
• **LIM, Hae-Jin**
  07335 Seoul (KR)
• **CHOI, Su-Ji**
  07335 Seoul (KR)
• **KANG, Bo-Hyun**
  07335 Seoul (KR)
• **JUNG, Ji-Min**
  07335 Seoul (KR)
• **KONG, Jin-Hak**
  07335 Seoul (KR)
• **LEE, Soon-O**

**(Cont. next page)**

EP 4 311 013 A2

**07335 Seoul (KR)**
• CHOI, Kyu-Hyun
  **07335 Seoul (KR)**
• PARK, Pil-Kyu
  **07335 Seoul (KR)**

(74) Representative: **Goddar, Heinz J.**
  **Boehmert & Boehmert**
  **Anwaltspartnerschaft mbB**
  **Pettenkoferstrasse 22**
  **80336 München (DE)**

Remarks:

This application was filed on 08-12-2023 as a divisional application to the application mentioned under INID code 62.

(54) **ELECTRODE TERMINAL, CYLINDRICAL BATTERY CELL, BATTERY PACK AND VEHICLE**

(57)  Disclosed is a structure of an electrode terminal, and a cylindrical battery cell, a battery pack and a vehicle including the same. The structure of an electrode terminal includes a battery can configured to have one open side; an electrode terminal passing through a perforation hole formed in a bottom of the battery can; and a gasket interposed between the electrode terminal and the perforation hole. Also, the electrode terminal includes a body portion inserted into the perforation hole; an outer flange portion configured to extend along an outer surface of the bottom from a circumference of one side of the body portion exposed through the outer surface; an inner flange portion configured to extend toward an inner surface of the bottom from a circumference of the other side of the body portion exposed through the inner surface; and a flat portion provided to an inner side of the inner flange portion.

FIG. 5

(52) Cooperative Patent Classification (CPC): (Cont.)
H01M 50/249; H01M 50/503; H01M 2220/20;
Y02E 60/10; Y02P 70/50

## Description

TECHNICAL FIELD

The present disclosure relates to a an electrode terminal, and a cylindrical battery cell, a battery pack and a vehicle including the same.

BACKGROUND ART

Secondary batteries that are easily applicable to various product groups and have electrical characteristics such as high energy density are universally applied not only to portable devices but also to electric vehicles (EVs), hybrid electric vehicles (HEVs) or the like driven by an electric drive source.

These secondary batteries are attracting attention as a new energy source to improve eco-friendliness and energy efficiency because they have the primary advantage that they can dramatically reduce the use of fossil fuels as well as the secondary advantage that no byproducts are generated from the use of energy.

Secondary batteries currently widely used in the art include lithium ion batteries, lithium polymer batteries, nickel cadmium batteries, nickel hydrogen batteries, nickel zinc batteries, and the like. A unit secondary battery cell has an operating voltage of about 2.5V to 4.5V. Therefore, when a higher output voltage is required, a battery pack is configured by connecting a plurality of battery cells in series. In addition, a plurality of battery cells may be connected in parallel to form a battery pack according to the charge/discharge capacity required for the battery pack. Accordingly, the number of battery cells included in the battery pack and the form of electrical connection may be variously set according to the required output voltage and/or charge/discharge capacity.

Meanwhile, as a kind of secondary battery cell, there are known cylindrical, rectangular, and pouch-type battery cells. In the case of a cylindrical battery cell, a separator serving as an insulator is interposed between a positive electrode and a negative electrode, and they are wound to form an electrode assembly in the form of a jelly roll, which is inserted into a battery can together with an electrolyte to configure a battery. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap plate of a sealing body that seals the opening of the battery can, and the negative electrode terminal is the battery can.

However, according to the conventional cylindrical battery cell having such a structure, since current is concentrated in the strip-shaped electrode tab coupled to the uncoated portion of the positive electrode and/or the uncoated portion of the negative electrode, the current collection efficiency is not good due to large resistance and large heat generation due to a small cross section area of the strip-shaped electrode tab.

For small cylindrical battery cells with a form factor of 18650 or 21700, resistance and heat are not a major issue. However, when the form factor is increased to apply the cylindrical battery cell to an electric vehicle, the cylindrical battery cell may ignite while a lot of heat is generated around the electrode tab during the rapid charging process.

In order to solve this problem, there is provided a cylindrical battery cell (so-called tab-less cylindrical battery cell) in which the uncoated portion of the positive electrode and the uncoated portion of the negative electrode are designed to be positioned at the top and bottom of the jelly-roll type electrode assembly, respectively, and the current collecting plate is welded to the uncoated portion to improve the current collecting efficiency.

DISCLOSURE

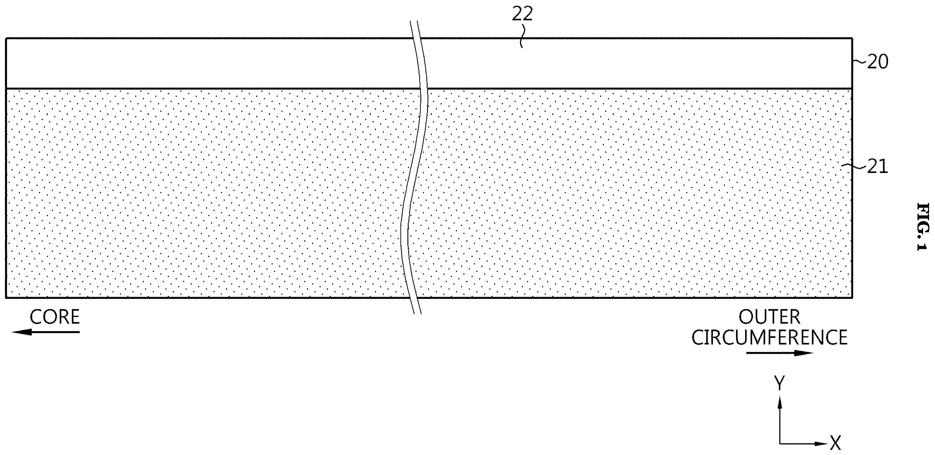

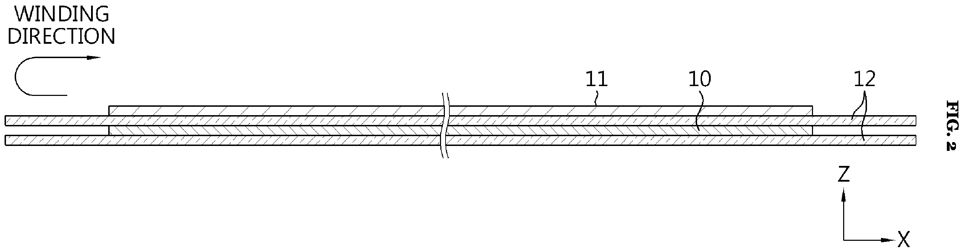

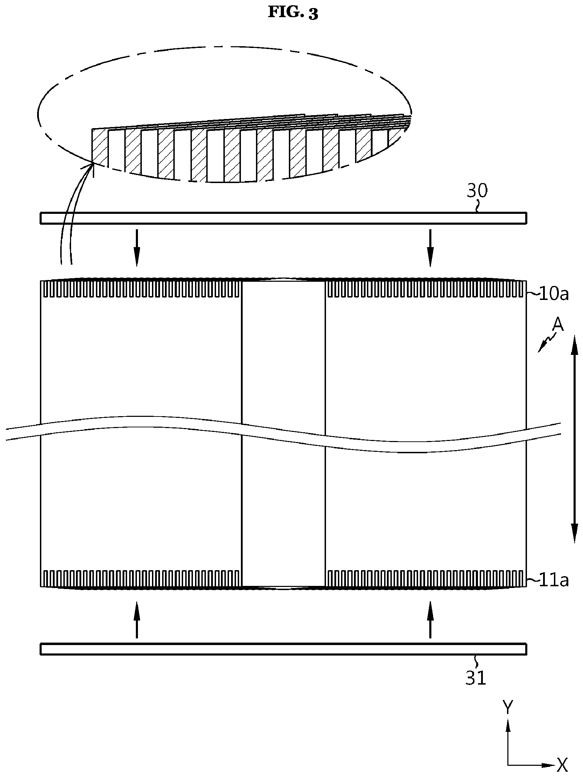

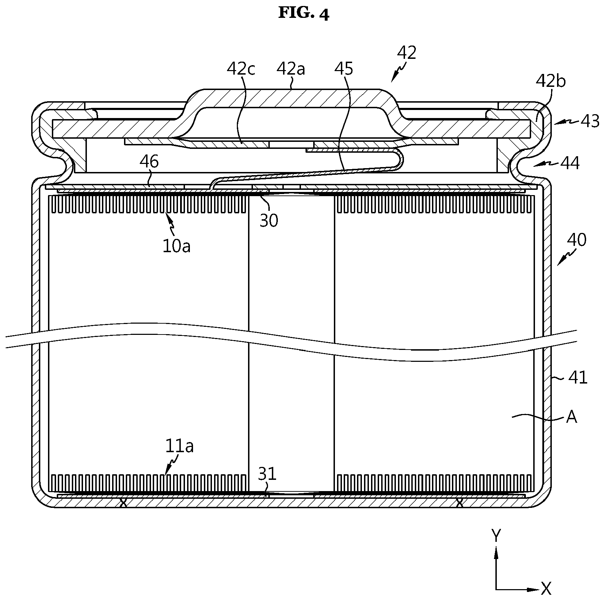

FIGS. 1 to 3 are diagrams showing a process of manufacturing a tab-less cylindrical battery cell. FIG. 1 shows the structure of an electrode plate, FIG. 2 shows a process of winding the electrode plate, and FIG. 3 shows a process of welding a current collecting plate to a bent surface of an uncoated portion. FIG. 4 is a sectional view showing the tab-less cylindrical battery cell, taken along a longitudinal direction (Y).

Referring to FIGS. 1 to 4, a positive electrode plate 10 and a negative electrode plate 11 have a structure in which a sheet-shaped current collector 20 is coated with an active material 21, and include an uncoated portion 22 at one long side along the winding direction X.

An electrode assembly A is manufactured by sequentially stacking the positive electrode plate 10 and the negative electrode plate 11 together with two sheets of separators 12 as shown in FIG. 2 and then winding them in one direction X. At this time, the uncoated portions of the positive electrode plate 10 and the negative electrode plate 11 are arranged in opposite directions.

After the winding process, the uncoated portion 10a of the positive electrode plate 10 and the uncoated portion 11a of the negative electrode plate 11 are bent toward the core. After that, current collecting plates 30, 31 are welded and coupled to the uncoated portions 10a, 11a, respectively.

An electrode tab is not separately coupled to the positive electrode uncoated portion 10a and the negative electrode uncoated portion 11a, the current collecting plates 30, 31 are connected to external electrode terminals, and a current path is formed with a large cross-sectional area along the winding axis direction of electrode assembly A (see an arrow in Fig. 3), which has an advantage of lowering the resistance of the battery cell. This is because resistance is inversely proportional to the cross-sectional area of the path through which the current flows.

However, when the form factor of the cylindrical battery cell increases and the magnitude of the charging current during rapid charging increases, the heat problem also occurs again in the tab-less cylindrical battery cell.

Specifically, the conventional tab-less cylindrical battery cell 40 includes a battery can 41 and a sealing body 42 as shown in FIG. 4. The sealing body 42 includes a cap plate 42a, a sealing gasket 42b and a connection plate 42c. The sealing gasket 42b surrounds the edge of the cap plate 42a and is fixed by a crimping portion 43. In addition, the electrode assembly A is fixed in the battery can 41 by a beading portion 44 to prevent vertical movement.

Typically, the positive electrode terminal is the cap plate 42a of the sealing body 42, and the negative electrode terminal is the battery can 41. Accordingly, the current collecting plate 30 coupled to the uncoated portion 10a of the positive electrode plate 10 is electrically connected to the connection plate 42c attached to the cap plate 42a through a lead 45 in the form of a strip. In addition, the current collecting plate 31 coupled to the uncoated portion 11a of the negative electrode plate 11 is electrically connected to the bottom of the battery can 41. An insulator 46 covers the current collecting plate 30 to prevent the battery can 41 and the uncoated portion 10a of the positive electrode plate 10 having different polarities from contacting each other and causing a short circuit.

When the current collecting plate 30 is connected to the connection plate 42c, the lead 45 in the form of a strip is used. The lead 45 is separately attached to the current collecting plate 30 or is manufactured integrally with the current collecting plate 30. However, since the lead 45 is in the form of a thin strip, its cross-sectional area is small, and thus a lot of heat is generated when the rapid charging current flows. In addition, the excessive heat generated from the lead 45 is transferred to the electrode assembly A to shrink the separator 12, which may cause an inner short circuit that is a main cause of thermal runaway.

The lead 45 also occupies a significant installation space within the battery can 41. Therefore, the cylindrical battery cell 40 including the lead 45 has low space efficiency, so there is a limit in increasing the energy density.

Moreover, in order to connect the conventional tab-less cylindrical battery cells 40 in series and/or in parallel, it is necessary to connect a bus bar component to the cap plate 42a of the sealing body 42 and the bottom surface of the battery can 41, which deteriorates the space efficiency. A battery pack mounted on an electric vehicle includes hundreds of cylindrical battery cells 40. Therefore, the inefficiency of the electrical wiring causes considerable inconvenience in the assembly process of the electric vehicle and the maintenance of the battery pack.

TECHNICAL PROBLEM

The present disclosure is designed to solve the problems of the related art, and therefore the present disclosure is directed to lowering the inner resistance of a cylindrical battery cell and increasing the energy density by improving an electrode terminal structure of the cylindrical battery cell to increase the space efficiency in a battery can.

The present disclosure is also directed to improving the electrode terminal structure of a cylindrical battery cell to solve the internal heating problem caused during rapid charging by expanding the cross-sectional area of a current path.

The present disclosure is also directed to providing a cylindrical battery cell having an improved structure that allows electrical wiring for serial and/or parallel connection of the cylindrical battery cells to be performed at one side of the cylindrical battery cells.

The present disclosure is also directed to providing a battery pack manufactured using the cylindrical battery cell with an improved structure and a vehicle including the battery pack.

However, the technical objects to be solved by the present disclosure are not limited to the above, and other objects not mentioned herein will be clearly understood by those skilled in the art from the following disclosure.

TECHNICAL SOLUTION

The present invention is given by the subject matter of the independent claims. Particular examples of the present invention are given by the features of the dependent claims. Furthermore, any of the features described above may also be included in the claimed subject matter unless inappropriate.

A structure may be provided. The structure may refer to a product, system, device or apparatus that provides a feed-through (or lead through, which may be figuratively referred to as a rivet structure) for an electrode from inside an enclosure to the outside. Such a feed-through may be electrically conductive and may be referred to as a terminal (or electrode terminal).

The structure may comprise a battery can, an electrode terminal and a gasket. The battery can may have a first end face and a second end face that are opposite to each other. Generally, any of the first and second end faces may be open, closed or closed except for an opening. The first end face of the battery can may be open. The second end face may be closed except for an opening. Herein, a closed portion of the second end face may be referred to as a bottom (of the battery can). The (closed portion of the) second end face of the battery can may have an inner surface, or an inner side, arranged inside the battery can. The (closed portion of the) second end face of the battery can may have an outer surface, or outer side, arranged outside of the battery can.

The electrode terminal may pass through a perforation hole formed in the second end face of the battery can. The gasket may be interposed between the electrode terminal and the perforation hole. The electrode terminal may include a body portion, an outer flange portion, an inner flange portion and a flat portion. The body portion of the electrode terminal may pass through the perforation hole. The outer flange portion of the electrode terminal may extend from the body portion along an outer surface of the second end face of the battery can. The inner flange portion of the electrode terminal may be arranged inside the battery can and extend outwardly from the body portion. The flat portion of the electrode terminal may be arranged in the battery can and be surrounded by the inner flange portion.

The battery can may have a cylindrical geometry. The cylindrical geometry of the battery can may define a radial direction, an axial (elongation) direction and a circumferential (tangential) direction in accordance with the teaching of basic mathematics. Hereinafter and unless indicated otherwise, a view in the axial direction may be referred to a plan view. The first end face and the second end face of the battery can may each extend in the radial and circumferential directions (and/or perpendicular to the axial direction) of the battery can. The battery can may have a sidewall extending between the first end face and the second end face of the battery can. The first end face of the battery can may be substantially open (i.e., void, empty). For example, the first end face of the battery can may be open except for a periphery (an edge portion). For example, the first end face of the battery can may be open such as to allow an electrode assembly to be inserted therethrough.

The perforation hole formed in the second end face of the battery can may be a through hole. The perforation hole may be configured to allow the electrode terminal, or the body portion of the electrode terminal, to pass through. The second end face of the battery can may be solid (closed) except for the perforation hole.

The sidewall may be referred to as an outer circumferential surface or lateral surface of the battery can. The sidewall of the battery can may be completely, or at least substantially, solid. The battery can, or its components, may have any of the respective features described below with reference to the drawings.

The electrode terminal may also be referred to as a terminal. The electrode terminal may penetrate or, figuratively, may be riveted through, (the perforation hole of) the second end face of the battery can. The electrode terminal may provide a feed-through for an electrode that may be accommodated in the battery can to the outside of the battery can. Alternatively or additionally, the electrode terminal may provide a contact area configured to be connected with an external load. The electrode terminal may have a (substantially or approximately) cylinder-symmetrical shape. Accordingly, the electrode terminal may have an axial direction, a radial direction and a circumferential (tangential) direction. The electrode terminal may be arranged such that the symmetry axis of the cylindrical geometry matches the symmetrical axis of the battery can. Alternatively or additionally, the electrode terminal may have a shape that is rotational symmetric or mirror-symmetric, or any other symmetrical shape with respect to the symmetrical axis. The electrode terminal may have any of the respective features of an electrode terminal described below with reference to the drawings.

The electrode terminal may pass through the second end face of the battery can through the perforation hole formed therein. The body portion may refer to a central part of the electrode terminal with respect to the radial direction (in particular, of the battery can or the electrode terminal) of the structure. The body portion may refer to a part of the electrode terminal that extends through the perforation hole in/of the second end face of the battery can. The body portion may protrude from the battery can to the outside. The body portion may extend into the battery can. The body portion may have a block shape or a cylindrical shape. The body portion may have a cross section (e.g., a circular cross section) that (in shape and size) corresponds to a cross section of the perforation hole in the plan view. The body portion may have any of the respective features of a body portion described below with reference to the drawings.

The outer flange portion may refer to a part of the electrode terminal that is, or is configured to be, arranged outside of the battery can. The outer flange portion may refer to a part of the electrode terminal that extends, outside of the battery can, from the body portion outwardly in the radial direction. Approximately, the outer flange portion may have the shape of a washer (shim, lining disk). In a plan view, the outer flange portion may have an annular shape. The outer flange portion may have any of the respective features of an outer flange portion, particularly with respect to its dimensions, described below with reference to the drawings.

The inner flange portion may refer to a part of the electrode terminal that is, or is configured to be, arranged inside of the battery can. The inner flange portion may refer to a part of the electrode terminal that extends, inside of the battery can, from the body portion outwardly in the radial direction. The inner flange portion may extend from the body portion also in the axial direction such as to form inclined surfaces in a cross-sectional view in the radial direction. Approximately, the inner flange portion may have the shape of a section of a hollow cone (without an apex). A thickness of the inner flange portion may be measured in the axial direction and may vary with a distance from the body portion. In a plan view, the inner flange portion may have an annular shape. The inner flange portion may have any of the respective features of an inner flange portion, particularly with respect to its dimensions, described below with reference to the drawings.

The flat portion may refer to a part of the electrode terminal that is, or is configured to be, arranged inside the battery can. The flat portion may provide a contact surface to be coupled with another component of a battery, such as a current collector (plate) or an electrode tab. The flat portion may be or include a surface of the body portion facing in the axial direction. The flat portion may also include a part of the body portion forming said surface. The flat portion may have any of the respective features of a flat portion, particularly with respect to its dimensions, described below with reference to the drawings.

The gasket provides for a sealing between (the second end face of) the battery can and the electrode terminal. Additionally or alternatively, the gasket provided for an electrical insulation between (the second end face of) the battery can and the electrode terminal. For example, the gasket may be formed and arranged such that the electrode terminal does not come into physical contact with (the second face of) the battery can. The gasket may have any of the features of a gasket described below with reference to the drawings.

A structure may comprise: a battery can configured to have one open side; an electrode terminal fed through a perforation hole formed in a bottom of the battery can; and a gasket interposed between the electrode terminal and the perforation hole, wherein the electrode terminal includes: a body portion inserted into the perforation hole; an outer flange portion configured to extend along an outer surface of the bottom of the battery can from a circumference of one side of the body portion exposed through the outer surface; an inner flange portion configured to extend toward an inner surface of the bottom of the battery can from a circumference of the other side of the body portion exposed through the inner surface; and a flat portion provided to an inner side of the inner flange portion.

The flat portion may be parallel with the inner surface of the second end face of the battery can. The flat portion may be parallel with the inner surface of a bottom. Herein, the bottom may indicate the second end face of the battery can, unless otherwise indicated.

An angle between the inner flange portion and the inner surface of the second end face (the bottom) of the battery can may be 0° to 60°, or o° or more, 2° or more, 5° or more or 10° or more, and 60° or less, 55° or less, 50° or less, 45° or less, or 40° or less.

A recess may be provided between the inner flange portion and the flat portion. The recess may be formed by a sidewall of the body portion that extends from the flat portion in the axial direction, and a sidewall of the inner flange portion facing the flat portion. The recess may surround the flat portion. The recess may have a shape of a groove in a cross-sectional view in the radial direction, and an annular shape in a plan view in the axial direction. The recess may have any of the features of a recess described below with reference to the drawings.

The recess may have a sectional structure of an asymmetric groove. The asymmetry may refer to the cross-sectional view in the radial direction, which may be invariant from the viewing angle due to the cylinder symmetry of the electrode terminal. The asymmetric groove may refer to an asymmetry with respect to a plane that surrounds the symmetry axis, i.e., spans in the axial and circumferential direction. For example, an angle between the sidewall of the body portion extending from the flat portion and the axial direction may be different from an angle between the (inner) sidewall of the inner flange portion and the axial direction.

The asymmetry groove may be formed between the sidewall of the body portion extending from the flat portion and an inclined surface of the inner flange portion. The inclined surface may refer to the inner sidewall of the inner flange portion described above. In other words, the asymmetric groove may include a sidewall of the flat portion and an inclined surface of the inner flange portion connected to an end of the sidewall.

The sidewall of the body portion (which may also be referred to as the sidewall of the flat portion) may be perpendicular to the inner surface of the second end face (the bottom) of the battery can.

The body portion may taper in a direction from the second end face of the battery can to the flat portion. The tapering may refer to a shape in a cross-sectional view in the radial direction. The sidewall may be inclined toward the flat portion, with respect to a plane spanning in the axial and circumferential directions.

The inner flange portion may have a thickness that decreases as being farther away from the body portion. The decreasing may be continuously, gradually, stepwise, or any combination thereof.

The gasket may include an outer gasket and an inner gasket. The outer gasket may be interposed between the outer flange portion and the outer surface of the second end face (the bottom) of the battery can. The inner gasket may be interposed between the inner flange portion and the inner surface of the second end face (the bottom) of the battery. A thickness of the inner gasket may vary in an outward direction. The outward direction may be approximately the radial direction. In other words, the inner gasket may have different thicknesses depending on a location along its extension.

A thickness of the inner gasket may be smaller between an edge of the perforation hole and the inner flange portion than a thickness of a rest of the inner gasket. In other words, the inner gasket may have a minimum thickness in a region between an edge of the perforation hole and the inner flange portion. The region of the inner gasket interposed between the (inner) edge of the perforation hole connected to the inner surface of the bottom and the inner flange portion may have a relatively smaller thickness than the other region. The edge may refer to an inner part of the second end face of the battery can that surrounds the perforation hole. The above may be obtained by a deformation of the electrode terminal such that a tip (i.e., an outermost portion) of the inner flange portion is bent towards the second end face of the battery can. As a result, the tip of the inner flange portion may be pressed into the inner gasket, thereby reducing its thickness (to a minimum) at this location.

A region of the inner gasket interposed between the perforation hole and the body portion may have a thickness that decreases as being farther from than the outer flange portion. The decreasing may be continuously, stepwise, gradually, or any combination thereof.

The thickness of the inner gasket is at minimum at an end of the inner flange portion. A region of the inner gasket interposed between the inner surface of the bottom and a region near the end of the inner flange portion may have a smallest thickness.

the (inner) edge of the perforation hole may include a surface that faces the inner flange portion. This surface of the perforation hole may be referred to as a facing surface. The edge may refer to an inner part of the second end face of the battery can that surrounds the perforation hole. The facing surface may be tilted (inclined) with respect to a rest of (the closed portion of) the second end face of the battery can. The edge of the perforation hole may have any of the features as described below with reference to the drawings.

The inner gasket may extend further from the body portion than the inner flange portion so that an end portion of the inner gasket may be exposed. The inner gasket may be configured to extend longer than the inner flange portion so that an end thereof is exposed. Here, the end portion, or the end, of the inner gasket being exposed may indicate that it extends in the radial direction beyond the inner flange portion. Alternatively or additionally, being exposed may mean that the respect part becomes visible in a plan view in the axial direction.

A distance of the flat portion from the inner surface of the second end face of the battery may be equal to or larger than a height of an end (the tip) of the inner gasket from the inner surface of the second end face of the battery can.. A height of the flat portion may be equal to or larger than a height of an end of the inner gasket based on the inner surface of the bottom. In the following, a dimension or measure (height, width, length, distance, etc.) of one element being "based on" another element may indicate that the respective dimension or measure of the one element is measured from (or with respect to) the other element. Herein, a height may refer to a dimension (i.e., be measured in) in the axial direction.

A height of the flat portion may be equal to or larger than a height of the inner flange portion. The heights may be measured from the inner surface of the second end face (the bottom) of the battery can.

The height of the inner flange portion may be larger than a height of an end of the inner gasket. The heights may be measured from the inner surface of the second end face (the bottom) of the battery can.

The height of the inner flange portion may be 0.5 mm to 3.0 mm, or 0.5 mm or more, or 0.7 mm or more, or 1.0 mm or more, or 1.5 mm or more, and 3.0 mm or less, 2.5 mm or less, 2.0 mm or less, or 1.5 mm or less. The height may be measured based on the inner surface of the bottom (the second end face) of the battery can.

A height of the electrode terminal between an outer surface of the outer flange portion to (an outer surface of) the flat portion may be 4 mm to 7 mm, or 4 mm or more, or 4.5 mm or more, or 5 mm or more, or 5.5 mm or more, and 7 mm or less, 6.5 mm or less, 6 mm or less, or 5.5 mm or less. The outer surface of the outer flange portion may be referred to as a lower surface in an embodiment where the battery can is arranged with the second end face down.

A height of the outer flange portion may be 0.8 mm or more from the outer surface of the second end face (the bottom) of the battery can.

At least a portion of the outer gasket may be exposed to the outside of the outer flange portion. An exposure width of the outer gasket measured in a direction parallel to the outer surface of the bottom of the battery can may be 0.1 mm to 1 mm, or 0.1 mm or more, or 0.2 mm or more, or 0.3 mm or more, or 0.4 mm or more, or 0.5 mm or more, and 1 mm or less, 0.9 mm or less, 0.8 mm or less, or 0.7 mm or less, or 0.6 mm or less. The exposure width may refer to a measure of the outer gasket by which it extends beyond the outer flange portion in a plan view. The exposure width may be measured along the extension of the outer gasket, and/or approximately determined in the radial direction.

A radius from a center of the body portion to an edge of the outer flange portion (i.e., an outer radius of the outer flange portion) may be 10% to 70% of a radius of the second end face of the battery can. The outer radius of the outer flange portion may be 10% or more, 15% or more, 20% or more, 25% or more, 30% or more, 35% or more, 40% or more, and 70% or less, 65% or less, 60% or less, 55% or less, or 45% or less of the radius of the second end face of the battery can. The radii may be determined from the symmetry axis of the battery can and/or the symmetry axis of the electrode terminal.

A radius of the flat portion may be may be 4% to 30% of a radius of the second end face of the battery can. Both the flat portion of the electrode terminal and the second end face of the battery can may have a circular shape in a plan view. The radius of the flat portion may be measured from the center of the body portion (i.e., the symmetry axis of the electrode terminal) to an edge of the flat portion. The radius of the flat portion may be 4% or more, 5% or more, 7% or more, 10% or more, 15% or more, or 20% or more, and 30% or less, 27.5% or less, 25% or less, 22.5% or less, or 20% or less of the radius of the second end face of the battery can.

A compression ratio of the inner gasket may be 30% to 90%, or 50% to 90%, or 30% or more, 35% or more, 40% or more, 45% or more, 50% or more, 55% or more, or 60% or more, and 90% or less, 85% or less, 80% or less, 75% or less, 70% or less, or 65% or less. The compression ratio may indicate a ratio of thickness change at a maximum compression point compared to a thickness before compression of the gasket.

The inner gasket may include polybutylene terephthalate, polyethylene fluoride, or polypropylene.

A further aspect may refer to a cylindrical battery cell. The cylindrical battery cell may comprise an electrode assembly, a cylindrical battery can, an electrode terminal, a gasket and a sealing body. At least one of the cylindrical battery can, the electrode terminal and the gasket may be as specified above.

The electrode assembly may comprise a first electrode plate, a second electrode plate and a separator interposed therebetween. The electrode assembly may be wound such to have a first end face and a second end face opposite to each other. The electrode assembly may be wound such to have an approximately cylindrical shape around a symmetry axis, defining an axial (elongation) direction, a radial direction and a circumferential (tangential) direction. The first electrode plate may have an uncoated portion arranged at the first end face of the electrode assembly. The second electrode plate may have an uncoated portion arranged at the second end face of the electrode assembly. The uncoated portions may be arranged such to extend beyond the separator (in the axial direction). The electrode assembly may have any of the features of an electrode assembly as described below with reference to the drawings. The first electrode plate and the second electrode plate may each include a respective metal plate partly covered with an active material, wherein a respective portion of the first and second electrode plates that remain uncovered with an active material may define the respective uncoated portion.

The cylindrical battery can, which may also be referred to as a battery can, may accommodate the electrode assembly. The battery can may be electrically connected to the first electrode plate. The battery can may have a (substantially) cylindrical shape defining an axial direction, a radial direction and a circumferential (tangential) direction. The battery can may have a first end face and a second end face opposite to each other. The battery can may have any of the features of the battery can specified above and/or any of the features of a battery can described below with reference to the drawings.

The electrode terminal may pass through a perforation hole that is formed in the second end face of the battery can. The electrode terminal may be electrically connected to the second electrode plate. The electrode terminal may have any of the features of the electrode terminal specified above and/or any of the features of an electrode terminal described below with reference to the drawings.

The electrode terminal may comprise a body portion, an outer flange portion, an inner flange portion, and a flat portion. The body portion may pass through the perforation hole in/of the second end face of the battery can. The outer flange portion may extend from the body portion along an outer surface of the second end face of the battery can. The inner flange portion may be arranged inside the battery can and extend outwardly from the body portion. The flat portion may be arranged in the battery can and may be surrounded by the inner flange portion. Any of the body portion, the outer flange portion, the inner flange portion, and the flat portion may be configured as specified above and/or have any of the respective features as described below with reference to the drawings.

The gasket may be interposed between the electrode terminal and the perforation hole. The gasket may have any of the features of the gasket specified above and/or any of the features of a gasket described below with reference to the drawings.

The sealing body may close the first end face of the battery can. The sealing body may seal an opening (i.e., an open portion of the first end face) of the battery can. The sealing body may be configured such as to be insulated from the battery can. In particular, the sealing body may be configured to prevent any liquid or solid material from inside of the battery can from leaking to the outside of the battery can through the first end face of the battery can. While the battery can is electrically connected to one of the first and second electrode plates, the sealing body may be configured to be free of any electrical (electrochemical) potential of the first and second electrode plates. The sealing body may have any of the features of a sealing body as described below with reference to the drawings.

A cylindrical battery cell may comprise an electrode assembly, a cylindrical battery can, an electrode terminal, a gasket and a sealing body. The electrode assembly may comprise a first electrode plate and a second electrode plate having a sheet shape are wound with a separator interposed therebetween. The electrode assembly may have an uncoated portion of the first electrode plate and an uncoated portion of the second electrode plate configured to extend from both ends thereof and exposed to the outside of the separator. The cylindrical battery can may be configured to accommodate the electrode assembly and electrically connected to the first electrode plate. The electrode terminal may lead through (penetrating, or riveting (figuratively)) a perforation hole formed in a bottom of the battery can and may be electrically connected to the second electrode plate. The electrode terminal may include a body portion, an outer flange portion, an inner flange portion and a flat portion. The body portion may be inserted into the perforation hole. The outer flange portion maybe configured to extend along an outer surface of the bottom of the battery can from a circumference of one side of the body portion exposed through the outer surface. The inner flange portion may be configured to extend toward an inner surface of the bottom of the battery can from a circumference of the other side of the body portion exposed through the inner surface. The flat portion may be provided to an inner side of the inner flange portion. The gasket may be interposed between the electrode terminal and the perforation hole. The sealing body may be configured to seal an open end of the battery can so as to be insulated from the battery can.

The battery can may include a beading portion.

The beading portion may be formed by pressing a sidewall of the battery can inwardly at a portion proximal to the first end face of the battery can. The sidewall of the battery can may be a lateral wall of the battery can that extends between the first end face and the second end face of the battery can. The sealing body may include a cap plate and a sealing gasket interposed between the cap plate and the first end face of the battery can. The beading portion may be formed in a region adjacent to the open end and pressed-in into the battery can. The sealing body may include a cap plate having no polarity and a sealing gasket interposed between an edge of the cap plate and the open end of the battery can. No polarity may mean that the cap plate is free of the electrical (electrochemical) potential of the first and second electrode plates. For example, the cap plate may not be electrically connected to any of the first and second electrode plates.

The beading portion may refer to an indented portion of the battery can. The battery can may be indented at a location proximal to (close to, near, adjacent, in vicinity of) the first end face. The resulting circumferential indentation may be referred to as the beading portion of the battery can. The beading portion may have any of the features of a beading portion described below with reference to the drawings.

The cap plate may approximately have a similar or same shape as the opening of the first end face of the battery can in a plan view in the axial direction. The cap plate may have a circular or polygonal shape in the plan view. The opening in/of the first end face may have a circular or polygonal shape in the plan view.

The battery can may further include a crimping portion extended and bent into the inside of the battery can and configured to surround and fix the edge of the cap plate together with the sealing gasket. The crimping portion may have any of the features of a crimping portion described below with reference to the drawings.

The cap plate may include a vent notch that is configured to rupture in response to a pressure inside the battery exceeding a threshold. In this respect, a rupture may be a process of losing structural integrity and, as a result, forming an opening such through which a fluid can pass. The vent notch may be such that a thickness of the cap plate is reduced locally (i.e., in comparison to a rest of the cap plate). The vent notch may be configured, e.g., located, arranged and dimensioned, such to cause the rupture in response to a predetermined threshold. The vent notch may have any of the features of a vent notch described below with reference to the drawings.

For example, the threshold for a rupture of the vent notch may be in a range of 15 $kgf/cm^2$ to 35 $kgf/cm^2$. The threshold may be 15 $kgf/cm^2$ or more, 17.5 $kgf/cm^2$ or more, 20 $kgf/cm^2$ or more, 22.5 $kgf/cm^2$ or more or 25 $kgf/cm^2$ or more, and 35 $kgf/cm^2$ or less, 32.5 $kgf/cm^2$ or less, 30 $kgf/cm^2$ or less, 27.5 $kgf/cm^2$ or less, or 25 $kgf/cm^2$ or less. The pressure unit $kgf/cm^2$ may correspond to 98.0665 kPa in SI unit.

The cylindrical battery cell may further comprise a first current collecting plate coupled to the uncoated portion of the first electrode plate. The first current collecting plate may be configured (e.g., made of a material and has a shape such as) to electrically connect between the first electrode plate and the battery can. The first current collecting plate may be also referred to as a first current collector. The first current collecting plate may have any of the features of a corresponding current collecting plate described below with reference to the drawings.

At least an edge part of the first current collecting plate may be not in contact with the uncoated portion of the first electrode plate. The edge part of the first current collecting plate may be interposed between the beading portion and the sealing gasket and fixed by the crimping portion. Accordingly, if the battery can and/or the cap plate are compressed in the axial direction during a manufacturing process of the battery cell, a surface contact between (the edge part of) the first current collecting plate and (the beading portion of) the battery can may be increased and/or become tighter.

At least an edge part of the first current collecting plate may be fixed to an inner surface (i.e., inner circumference, inner side of the indentation) of the beading portion adjacent to the crimping portion by welding.

The cylindrical battery cell may further comprise a second current collecting plate coupled to the uncoated portion of the second electrode plate. The second current collecting plate may be configured (e.g., made of a material and has a shape such as) to electrically connect between the second electrode plate and the battery can. The second current collecting plate may be also referred to as a second current collector. The second current collecting plate may have any of the features of a corresponding current collecting plate described below with reference to the drawings.

At least a part of the second current collecting plate may be coupled to the flat portion of the electrode terminal. In particular, the second current collecting plate may be physically and electrically coupled to the flat portion of the electrode terminal.

The second current collecting plate and the flat portion of the electrode terminal may be coupled to each other by welding. The second current collecting plate and the flat portion of the electrode terminal may be welded such to result in a tensile strength of 2 kgf or more. In other words, a tensile strength of the welding portion between the second current collecting plate and the flat portion of the electrode terminal may be 2 kgf or above. Said tensile strength may be 2.5 kgf or more, 3 kgf or more, 4 kgf or more, 5 kgf or more, and 30 kgf or less, 25 kgf or less, 20 kgf or less, 15 kgf or less, 10 kgf or less, or 5 kgf or less. The tensile strength may refer to an ultimate tensile strength of a material. The tensile strength maybe determined using a conventional universal testing machine (UTM).

The second current collecting plate may be welded to the flat portion of the electrode terminal according to a predetermined pattern. An converted diameter (equivalent diameter) of a welding pattern exposed on a surface of the second current collecting plate may be 2 mm or more, 2.5 mm or more, 3 mm or more, 3.5 mm or more, or 4 mm or more.

A diameter of the flat portion of the electrode terminal may be 3 mm to 14 mm, or 3 mm or more, or 4 mm or more, 5 mm or more, or 6 mm or more, and 14 mm or less, 12 mm or less, 10 mm or less, 8 mm or less, or 6 mm or less. As specified above, the diameter of the flat portion of the electrode terminal may be determined from the center, or the symmetry axis, of the electrode terminal. As specified above, the flat portion may have a circular shape in a plan view in the axial direction.

A ratio of an area of the welding pattern exposed on a surface of the second current collecting plate to an area of the flat portion of the electrode terminal may be 2.04% to 44.4%, or 2.04% or more, 2.5% or more, 3% or more, 5% or more, 10% or more, 15% or more, 20% or more, or 30% or more, and 44.4% or less, 40% or less, 38% or less, 35% or less, or 30% or less. The areas may be determined as a projection in the axial direction (i.e., in a plan view).

The cylindrical battery cell may further comprise an insulator interposed between the second current collecting plate and an inner circumference of the second end face of the battery can and between an inner circumference of a sidewall of the battery can and the electrode assembly. The insulator may be configured (i.e., made of a material, have a shape and/or arranged) to provide an electrical insulation between the electrode assembly and the battery can. The insulator may have any of the features of an insulator described below with reference to the drawings.

The insulator may have a welding hole formed to expose the flat portion of the electrode terminal toward the second current collecting plate. The insulator may cover (a surface of) the second current collecting plate and an edge of the second end face of the electrode assembly. The welding hole of the insulator may allow welding of the second current collecting plate to the second end face of the electrode assembly therethrough. The welding hole may be configured in a manner as described below with reference to the drawings. The welding hole may be a general term including multiple holes formed for the said purpose.

A height of the flat portion of the electrode terminal from the inner surface of the second end face of the battery can may be equal to or smaller than a thickness of the insulator. In other words, the height from the inner surface of the bottom of the battery can to the flat portion of the electrode terminal may be equal to or smaller than the thickness of the insulator.

The gasket may include an outer gasket and an inner gasket. The outer gasket may be interposed between the outer flange portion and the outer surface of the bottom of the battery can. The inner gasket interposed between the inner flange portion and the inner surface of the bottom of the battery can. Any of the outer gasket and the inner gasket may have any of the respective features specified above and/or described below with reference to the drawings.

An end of the inner gasket may be exposed to the outside of the inner flange portion. The inner gasket may extend in the radial direction beyond the inner flange portion in a plan view. The inner gasket may extend further in the radial direction than the inner flange portion extends. In the plan view, the (radial) end of the inner gasket may protrude from the inner flange portion and thus be visible.

The welding hole may expose the flat portion of the electrode terminal and/or the inner flange portion.

The welding hole may expose the flat portion of the electrode terminal, the inner flange portion and the inner gasket.

The cylindrical battery cell may further comprise a first bus bar terminal and a second bus bar terminal. The first bus bar terminal may be electrically coupled to a surface of the electrode terminal. The second bus bar terminal may be electrically coupled to the outer surface of the bottom of the battery can. In a battery module, a battery pack or a vehicle, any of the first bus bar terminal and the second bus bar terminal can be used to conduct electrical current from (and to) the cylindrical battery cell to an electrical consumer load, such as an electrical motor.

The first bus bar terminal may lie on (overlap with, contact, coupled to) the electrode terminal to form a first overlapping region. The second bus bar terminal may lie on (overlap with, contact, coupled to) the outer surface of the bottom of the battery can to form a second overlapping region. A diameter of the electrode terminal and a width of the outer surface of the bottom of the battery can may satisfy the following relational expression,

$$W_1 \leq E_1 \leq D\text{-}2R_d\text{-}2G\text{-}2W_2$$

$$E_2 = 0.5^*(D\text{-}2R_d\text{-}2G\text{-}E_1)$$

($E_1$: diameter of the electrode terminal, $E_2$: width of an exposed surface parallel to a surface of the electrode terminal in the outer surface of the bottom of the battery can, D: outer diameter of the battery can, $R_d$: width of a round region at an edge of the battery can measured on a plane, G: exposure width of the outer gasket through an edge of the electrode terminal, $W_1$: maximum value among distances between any two points selected in an edge of the first overlapping region, $W_2$: maximum value among distances between two points where a plurality of linear lines passing through the center of the electrode terminal meet an edge of the second overlapping region).

A ratio obtained by dividing a diameter of the cylindrical battery cell by height may be greater than 0.4, or greater than 0.35, or greater than 0.42, or greater than 0.45, or greater than 0.48, or greater than 0.5, or greater than 5.5, or greater than 5.7, and smaller than 1.0, or smaller than 0.9, or smaller than 0.8, or smaller than 0.7, or smaller than 0.6. In particular, the diameter of the cylindrical battery cell may be between 40 mm and 50 mm, in particular 46 mm, while the height of the cylindrical battery cell may be between 70 mm to 90 mm, in particular 80 mm.

According to a further aspect, a battery pack comprising one or more cylindrical battery cells as described above may be provided.

The cylindrical battery cells may be arranged in one or more columns. The cylindrical battery cells may be arranged such that their electrode terminals and the second end faces of the battery cans of the cylindrical battery cells are on top. In other words, the electrode terminal and the outer surface of the bottom of the battery can of each cylindrical battery cell may be disposed to face upward.

The battery pack may comprise multiple bus bars configured to connect the plurality of cylindrical battery cells in series and in parallel. The bus bars may be disposed above the cylindrical battery cells. Each of the bus bars may include a body portion, multiple first bus bar terminals and multiple second bus bar terminals. The body portion of each of the bus bars may be configured to extend between electrode terminals of adjacent cylindrical battery cells. The first bus bar terminals may be respectively configured to extend in one side direction from the body portion and electrically coupled to the electrode terminal of the cylindrical battery cell located in the one side direction. The second bus bar terminals may be respectively configured to extend in the other side direction from the body portion and electrically coupled to the outer surface of the bottom of the battery can of the cylindrical battery cell located in the other side direction.

An AC resistance of the cylindrical battery cell measured between the electrode terminal and the outer surface of the bottom of the battery can may be 4 milliohms (mΩ) or less, 3.5 mΩ or less, 3 mΩ or less, or 2.8 mΩ or less. The resistance may be 0.5 mΩ or more, 1.0 mΩ or more.

In a further aspect a vehicle comprising the cylindrical battery cell as specified above and/or the battery pack described above.

ADVANTAGEOUS EFFECTS

According to an embodiment of the present disclosure, it is possible to lower the inner resistance of a cylindrical battery cell and increase the energy density by improving an electrode terminal structure of the cylindrical battery cell to increase the space efficiency in a battery can.

According to another embodiment of the present disclosure, it is possible to solve the internal heating problem caused during rapid charging by improving the electrode terminal structure of a cylindrical battery cell to expand the cross-sectional area of a current path.

According to still another embodiment of the present disclosure, electrical wiring for serial and/or parallel connection of the cylindrical battery cells may be performed at one side of the cylindrical battery cells.

According to still another embodiment of the present disclosure, it is possible to provide a battery pack manufactured using the cylindrical battery cell with an improved structure and a vehicle including the battery pack.

DESCRIPTION OF DRAWINGS

The accompanying drawings illustrate examples and serve, together with the foregoing disclosure, to provide further understanding of the technical features of the present disclosure. The present disclosure is not limited to the drawings.

FIG. 1 is a plan view showing a structure of an electrode plate used for a conventional tab-less cylindrical battery cell.

FIG. 2 is a diagram showing a process of winding an electrode assembly included in the conventional tabless cylindrical battery cell.

FIG. 3 is a diagram showing a process of welding a current collecting plate to a bent surface of an uncoated portion in the electrode assembly of FIG. 2.

FIG. 4 is a sectional view showing the conventional tab-less cylindrical battery cell, taken along a longitudinal direction (Y).

FIG. 5 is a sectional view showing a riveting structure of an electrode terminal.

FIG. 6a is an enlarged sectional view showing a portion indicated by a dotted circle in FIG. 5.

FIG. 6b is a partially enlarged sectional view showing a riveting structure of an electrode terminal.

FIG. 6c is a schematic view illustrating a welding pattern and a converted diameter.

FIG. 7a is a sectional view showing a cylindrical battery cell according to an embodiment of the present disclosure, taken along a longitudinal direction (Y).

FIG. 7b is a sectional view showing a cylindrical battery cell taken along a longitudinal direction (Y).

FIG. 8 is a plan view exemplarily showing an electrode plate structure.

FIG. 9 is a sectional view showing an electrode assembly in which a segment structure of an uncoated portion of the electrode plate is applied to a first electrode plate and a second electrode plate, taken along the longitudinal direction (Y).

FIG. 10a is a sectional view showing an electrode assembly in which the uncoated portion is bent taken along the longitudinal direction (Y).

FIG. 10b is a perspective view showing the electrode assembly in which the uncoated portion is bent.

FIG. 11 is a top plan view showing that a plurality of cylindrical battery cells are connected in series and in parallel using a bus bar.

FIG. 12a is a partially enlarged view of FIG. 11.

FIGS. 12b and 12c are diagrams exemplarily showing parameters used in defining a diameter of the electrode terminal and an exposure width of an outer surface of a second end face of a battery can.

FIG. 13 is a diagram showing a schematic configuration of a battery pack including the cylindrical battery cells.

FIG. 14 is a diagram showing a schematic configuration of a vehicle including the battery pack.

EXAMPLES

Hereinafter, examples will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is for the purpose of illustrations only, and not intended to limit the scope of the disclosure, so it should be understood that other equivalents and modifications could be made thereto without departing from the scope of the disclosure.

In addition, in order to help understanding of the invention, in the accompanying drawings, some components may not be drawn to scale, but their dimensions may be exaggerated. Also, the same reference numbers may be assigned to the same components in different embodiments.

When it is explained that two objects are identical, this means that these objects are 'substantially identical'. Accordingly, the substantially identical objects may include deviations considered low in the art, for example, deviations within 5%. Also, when it is explained that certain parameters are uniform in a predetermined region, this may mean that the parameters are uniform in terms of an average.

A cylindrical battery cell may include an electrode terminal passing through a second end face of a battery can. The battery cell and the electrode terminal may have any of the features as specified above. In particular, the battery cell and the electrode terminal may each have a cylindrical geometry defining a respective axial direction, a respective radial direction and a respective circumferential direction. The battery can and the electrode terminal may be arranged such that their axial, radial and circumferential directions respectively match.

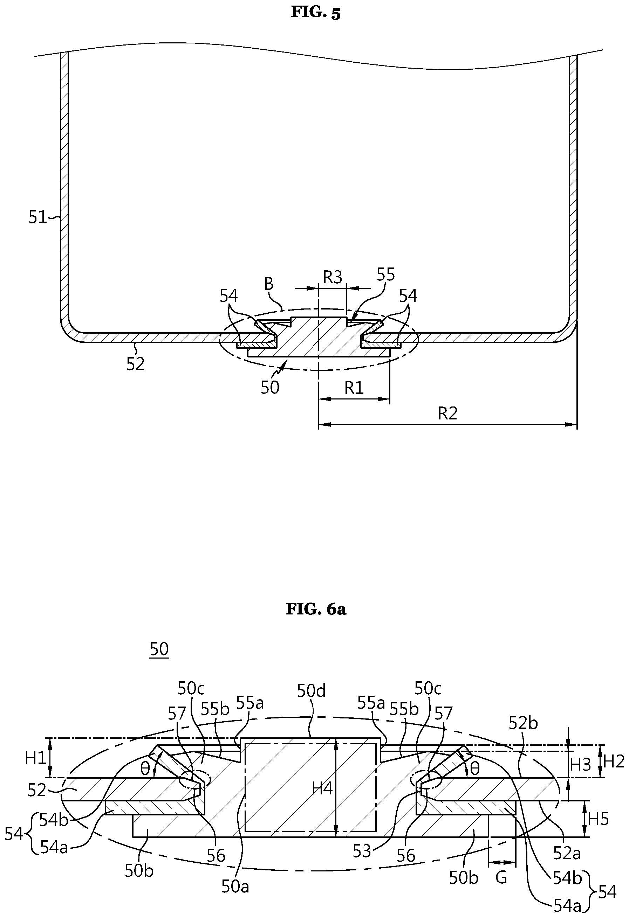

FIG. 5 is a sectional view showing a structure of an electrode terminal 50, and FIG. 6a is an enlarged sectional view showing a portion indicated by a dotted circle in FIG. 5. Herein, the expression "to rivet to/through" may indicate, figuratively, to insert into and deform in a manner similar to the common riveting, however without a second part being present that is fastened to the battery can.

Referring to FIGS. 5 and 6a, the structure of the electrode terminal 50 according to the embodiment may include a cylindrical battery can 51 having one open side, an electrode terminal 50 passing through a perforation hole 53 formed in a second end face 52 of the battery can 51, and a gasket 54 interposed between the electrode terminal 50 and the perforation hole 53.

The battery can 51 is made of a conductive metal material. In one example, the battery can 51 may be made of a steel, an aluminum, stainless steel or the like, but the present disclosure is not limited thereto. The inner and outer surfaces of the battery can 51 may be coated with a Ni plating layer.

The electrode terminal 50 is made of a conductive metal material. In one example, the electrode terminal 50 may be made of a steel, an aluminum, stainless steel or the like, but the present disclosure is not limited thereto. The electrode terminal 50 may be made of 10 series aluminum alloy, which is easy to insert and deform for fixation (i.e., to rivet, figuratively speaking) and has low resistance.

The gasket 54 may be made of a polymer resin having insulation and elasticity. In one example, the gasket 54 may be made of polypropylene, polybutylene terephthalate, polyethylene fluoride, or the like, but the present disclosure is not limited thereto.

The electrode terminal 50 may include a body portion 50a inserted into the perforation hole 53, an outer flange portion 50b extending along an outer surface 52a from the circumference of one side of the body portion 50a exposed through the outer surface 52a of the second end face 52 of the battery can 51, an inner flange portion 50c extending toward an inner surface 52b from the circumference of the other side of the body portion 50a exposed through the inner surface 52b of the second end face 52 of the battery can 51, and a flat portion 50d provided inside the inner flange portion 50c .

The flat portion 50d and the inner surface 52b of the second end face 52 of the battery can 51 may be parallel to each other. Here, the term 'parallel' means substantially parallel when observed with the naked eye.

According to an embodiment, the angle ($\theta$) between the inner flange portion 50c and the inner surface 52b of the second end face 52 of the battery can 51 may be 0° to 60°. The size of the angle is determined by the caulking strength when the electrode terminal 50 is installed in the perforation hole 53 of the battery can 51 by a caulking method. In one example, as the caulking strength increases, the angle ($\theta$) may decrease to 0°. If the angle exceeds 60°, the sealing effect of the gasket 54 may be deteriorated.

According to another embodiment, a recess 55 may be provided between the inner flange portion 50c and the flat portion 50d. The recess 55 may have a sectional structure of an asymmetric groove. In one example, the asymmetric groove may have an approximately V shape. The asymmetric groove may include a sidewall 55a of the flat portion 50d and an inclined surface 55b of the inner flange portion 50c connected to an end of the sidewall 55a. The sidewall 55a may be substantially perpendicular to the inner surface 52b of the second end face 52 of the battery can 51. The term 'vertical' means substantially vertical when observed with the naked eye. As will be explained later, the sidewall 55a may be inclined toward the flat portion 50d. The recess 55 is formed by the shape of a caulking jig when the electrode terminal 50 is installed in the perforation hole 53 of the battery can 51 in a caulking method.

The thickness of the inner flange portion 50c may gradually decrease as being farther away from the body portion 50a of the electrode terminal 50.

According to another embodiment, the gasket 54 may include an outer gasket 54a interposed between the outer flange portion 50b and the outer surface 52a of the second end face 52 of the battery can 51, and an inner gasket 54b interposed between the inner flange portion 50c and the inner surface 52b of the second end face 52 of the battery can 51. The outer gasket 54a and the inner gasket 54b are divided based on the outer surface 52a of the bottom of the battery can 51.

The outer gasket 54a and the inner gasket 54b may have different thicknesses depending on their locations. A region of the inner gasket 54b interposed between the inner flange portion 50c and an inner edge 56 of the perforation hole 53 connected to the inner surface 52b of the second end face 52 of the battery can 51 may have a relatively smaller thickness. A minimum thickness point may be present in a gasket region interposed between the inner edge 56 of the perforation hole 53 and the inner flange portion 50c. In addition, the inner edge 56 of the perforation hole 53 may include a facing surface 57 that faces the inner flange portion 50c.

Meanwhile, the top and bottom of the inner wall of the perforation hole 53 perpendicular to the second end face 52 of the battery can 51 are chamfered (corner-cut) to form a tapered surface toward the electrode terminal 50. However, the top and/or bottom of the inner wall of the perforation hole 53 may be transformed into a smooth curved surface with curvature. In this case, the stress applied to the gasket 54 near the top and/or bottom of the inner wall of the perforation hole 53 may be more relaxed.

The inner gasket 54b may extend longer than the inner flange portion 50c while forming an angle of 0° to 60° with the inner surface 52b of the second end face 52 of the battery can 51.

In another embodiment, the height (H1) of the flat portion 50d based on the inner surface 52b of the second end face 52 of the battery can 51 may be equal to or greater than the height (H2) of the end of the inner gasket 54b. In addition, the height (H1) of the flat portion 50d based on the inner surface 52b of the second end face 52 of the battery can 51 may be equal to or greater than the height (H3) of the end of the inner flange portion 50c. Here, the height H2 is the maximum height of the end of the inner gasket 54b measured based on the inner surface 52b. In addition, the height H3 is the maximum height of the end of the inner flange portion 50c measured based on the inner surface 52b.

If the height parameters H1, H2 and H3 satisfy the conditions, it is possible to prevent the inner flange portion 50c and the inner gasket 54b from interfering with other components.

The height (H3) of the inner flange portion 50c may be 0.5 mm to 3.0 mm. If the height (H3) of the inner flange portion 50c is less than 0.5 mm, sufficient sealing properties are not ensured. In addition, if the height (H3) of the inner flange portion 50c exceeds 3 mm, the inner space of the battery can 51 that can be occupied by the electrode assembly is reduced.

The height (H4) of the electrode terminal 50 may be 1.5 mm to 7 mm. The height (H4) of the electrode terminal 50 corresponds to a distance from the lower surface of the outer flange portion 50b to the flat portion 50d. If the height (H4) of the electrode terminal 50 is less than 1.5 mm, it is difficult to increase the height of the inner flange portion 50c to the extent that sealing properties can be secured due to the thickness of the second end face 52 of the battery can 51. For reference, the thickness of the battery can 51 second end face 52 is about 0.5 mm to 1 mm. In addition, if the height (H4) of the electrode terminal 50 exceeds 7 mm, the inner space of the battery can 51 that can be occupied by the electrode assembly decreases and the height of the cell increases, and thus the energy density per unit volume decreases as much. When H3 and H4 satisfy the above numerical ranges, it is possible to sufficiently secure the sealing properties of the electrode terminal 50 without reducing the space inside the battery can 51.

In another embodiment, the height (H5) of the outer flange portion 50b may be 0.8 mm or more based on the outer surface 52a of the bottom 54 of the battery can 51. If the height (H5) of the outer flange portion 50b is less than 0.8 mm, the outer flange portion 50b may be deformed when the electrode terminal 50 is inserted. The thickness of the outer gasket 54a is 0.3 mm or more in consideration of insulation and sealing properties. Considering the thickness of the outer gasket 54a, if the height of the outer flange portion 50b is less than o.8mm, the outer flange portion 50b becomes thin to a level that is difficult to secure sufficient mechanical rigidity. In particular, it is more serious when the electrode terminal 50 is made of aluminum. Meanwhile, the height of the outer flange portion 50b may be appropriately set in consideration of the space margin of the upper part of the cell. In an example, the height of the outer flange portion 50b may be set to 2 mm or less, or 3 mm or less, or 4 mm or less, but the present disclosure is not limited thereto.

In still another embodiment, at least a portion of the outer gasket 54a may be exposed to the outside of the outer flange portion 50b of the electrode terminal 50. The outer gasket 54a is in order to insulate the electrode terminal 50 and the outer surface 52a having the opposite polarity to the electrode terminal 50 from each other. For electrical insulation of the electrode terminal 50 and the outer surface 52a, the exposure width (G) of the outer gasket 54a may be 0.1 mm to 1 mm. If the exposure width (G) is smaller than 0.1 mm, the electrical insulation of the electrode terminal 50 and the outer surface 42a on a plane may be broken when high c-rate charge/discharge of 300A or more is performed. In addition, if the exposure width (G) exceeds 1 mm, the electrical insulation effect is not further increased, but rather the area of the outer surface 42a used as an area of the negative electrode is reduced, so the contact area of a component (e.g., a bus bar) used for electrical connection is reduced.

In still another embodiment, the diameter of the flat portion 50d of the electrode terminal 50 may be determined in consideration of welding strength between the current collecting plate and the flat portion 50d. The tensile strength of the welding portion between the flat portion 50d and the current collecting plate may be at least 2 kgf or more, or 5 kgf or more, or 6 kgf or more, or 7 kgf or more, or 8 kgf or more, or 9 kgf or more, or 10 kgf or more. It is desirable to increase the tensile strength of the welding portion as much as possible within an allowable range by selecting the welding method in a best way.

In order to satisfy the tensile strength condition of the welding portion, the diameter of the welding pattern formed on the flat portion 50d may be at least 2 mm. When the area (S) of the welding bead appearing on the surface of the welding portion is converted into an area ($\pi r^2$) of a circle, the diameter of the welding pattern may be defined as a converted diameter (equivalent diameter) ($2*(S/\pi)^{0.5}$) of the corresponding circle. The welding pattern may be continuous or discontinuous. When the welding pattern is not a circle, the converted diameter may be determined from a maximum value among distances between a center of the flat portion 50d and an outer boundary of the welding pattern.

The flat portion 50d of the electrode terminal 50 corresponds to a weldable region. The diameter of the weldable region may be 3 mm and 14 mm. If the diameter of the weldable region is less than 3 mm, it is difficult to secure a welding pattern with a diameter of 2 mm or more. In particular, when forming the welding pattern using laser welding, it is difficult to secure a welding pattern having a diameter of 2 mm or more due to laser beam interference. If the diameter of the weldable region exceeds 14 mm, the diameter of the outer flange portion 50b of the electrode terminal 50 becomes too large, and thus it is difficult to sufficiently secure the area of the outer surface 52a of the battery can second end face 52 to be used as the negative electrode region.

Considering the diameter condition of the welding pattern and the diameter condition of the weldable region, the ratio of the area of the welding pattern to the area of the weldable region required to secure a tensile strength of the welding portion of at least 2 kgf or more may be 2.04% ($\pi 1^2/\pi 7^2$) to 44.4% ($\pi 1^2/\pi 1.5^2$).

In another embodiment, the radius (R1) from the center of the body portion 50a to the edge of the outer flange portion 50b maybe 10 to 70% of the radius (R2) of the second end face 52 of the battery can 51.

If R1 is small, when wiring a component (a bus bar) used for electric connection of the electrode terminal 50, the welding space is insufficient. In addition, if R1 is large, the welding space decreases when welding a component (a bus bar) for electric connection to the outer surface 52a of the second end face 52 of the battery can 51 except for the electrode terminal 50.

If the ratio R1/R2 is adjusted between 10 and 70%, it is possible to properly secure the welding space for the electrode terminal 50 and the outer surface 52a of the second end face 52 of the battery can 51.

In addition, the radius (R3) from the center of the body portion 50a of the electrode terminal 50 to the edge of the flat portion 50d may be 4% to 30% of the radius (R2) of the second end face 52 of the battery can 51.

If R3 is small, the welding space becomes insufficient when welding a current collecting plate to the flat portion 50d of the electrode terminal 50, and the welding area of the electrode terminal 50 decreases, thereby increasing the contact resistance. In addition, R3 must be smaller than R1, and if R3 becomes larger, the thickness of the inner flange portion 50c becomes thinner, and the strength of the inner flange portion 50c compressing the gasket 54 becomes weak, which may deteriorating the sealing ability of the gasket 54.

If R3/R2 is adjusted between 4% to 30%, the welding process may be easily performed by sufficiently securing the welding area between the flat portion 50d of the electrode terminal 50 and the current collecting plate, and also it is possible to reduce the contact resistance of the welding region the and prevent the sealing ability of the gasket 54 from deteriorating.

According to an embodiment of the present disclosure, the structure of the electrode terminal 50 may be formed using a caulking jig that moves up and down. First, a preform (not shown) of the electrode terminal 50 is inserted into the perforation hole 53 formed in the second end face 52 of the battery can 51 by interposing the gasket 54. The preform refers to an electrode terminal before being inserted and deformed (i.e., riveted, figuratively speaking).

Next, the caulking jig is inserted into the inner space of battery can 51. The caulking jig has a groove and a protrusion corresponding to the final shape of the electrode terminal 50 on the surface opposite the preform in order to form the electrode terminal 50 by inserting and deforming the preform.

Next, the caulking jig is moved downward to perform press-forming to the upper portion of the preform, so that the preform is transformed into a riveted electrode terminal 50.

While the preform is pressed by the caulking jig, the outer gasket 54a interposed between the outer flange portion 50b and the outer surface 52a of the second end face 52 of the battery can 51 is elastically compressed so that its thickness decreases. In addition, as the region of the inner gasket 54b interposed between the inner edge 56 of the perforation hole 53 and the preform is elastically compressed by the inner flange portion 50c, the thickness of the region is further reduced than other regions. In particular, the region where the thickness of the inner gasket 54b is intensively reduced is indicated by a dotted circle in FIG. 6a. Accordingly, the sealing and airtightness between the riveted electrode terminal 50 and the battery can 51 are significantly improved.

The gasket 54 is compressed sufficiently to secure a desired sealing strength without being physically damaged in the process of inserting and deforming the preform.

The compression ratio of the gasket 54 may be 30% to 90%. The minimum compression ratio (30%) corresponds to a compression ratio of a minimum level to ensure the sealing property of the electrode terminal 50. The maximum compression ratio (90%) corresponds to a compression ratio of a maximum level that can be achieved without physically damaging the gasket 54.

In one example, when the gasket 54 is made of polybutylene terephthalate, it may be advantageous that the gasket 54 has a compression ratio of 50% or more at the point where the gasket 54 is compressed to a minimum thickness. The compression ratio is a ratio of thickness change before and after compression with respect to the thickness before compression.

The compression ratio is determined for the inner gasket 54b. That is, the compression ratio may be defined as the ratio of the thickness change at a maximum compression point compared to the thickness before compression of the inner gasket 54b. Hereinafter, this is also applied identically. The thickness of the inner gasket 54b before compression may be uniform, and a maximum compression point may exist near the inner edge 56.

In another example, when the gasket 54 is made of polyfluoroethylene, it may be advantageous that the gasket 54 has a compression ratio of 60% or more at the point where the gasket 54 is compressed to a minimum thickness. The compression ratio is determined for the inner gasket 54b.

In still another example, when the gasket 54 is made of polypropylene, it may be advantageous that the gasket 54 has a compression ratio of 60% or more at the point where the gasket 54 is compressed to a minimum thickness. The compression ratio is determined for the inner gasket 54b.

Press-forming may be performed in multiple stages to the upper portion of the preform by vertically moving the caulking jig at least two times. That is, the preform may be deformed several times by performing press-forming in multiple stages. At this time, the pressure applied to the caulking jig may be increased step by step. In this way, the stress applied to the preform is dispersed several times, thereby preventing the gasket 54 from being damaged during the caulking process. In particular, when the region of the inner gasket 54b interposed between the inner edge 56 of the perforation hole 53 and the preform is intensively compressed by the inner flange portion 50c, the damage to the gasket is minimized by performing press-forming in multiple stages.

After the press-forming is completely performed to the preform using the caulking jig, if the caulking jig is separated from the battery can 51, the structure of the electrode terminal 50 may be obtained as shown in FIG. 6a.

According to the above embodiment, the caulking jig performs press-forming to the upper portion of the preform by vertical moving inside the battery can 51. In some cases, a rotary jig used in the prior art may be used for performing press-forming to the preform.

However, the rotary jig rotates in a state of being inclined at a predetermined angle with respect to the central axis of the battery can 51. Therefore, the rotary jig with a large rotation radius may interfere with the inner wall of the battery can 51. In addition, if the battery can 51 has a large depth, the length of the rotary jig is also increased. In this case, as the rotation radius of the end of the rotary jig increases, press-forming may not be performed properly to the preform. Therefore, it is more effective to perform press-forming using a caulking jig rather than using a rotary jig.

Meanwhile, the electrode terminal 50 may have various structures depending on the design of the preform and/or the caulking jig and/or the gasket 54 and the magnitude of the pressure applied to the preform during the caulking process.

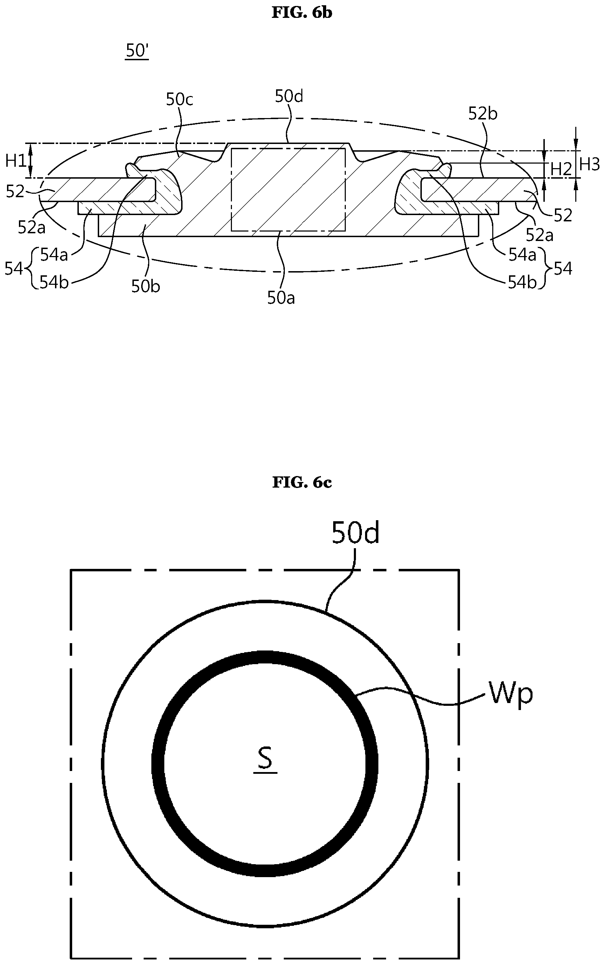

FIG. 6b is a partially enlarged sectional view showing the structure of an electrode terminals 50' according to another embodiment of the present disclosure.

Referring to FIG. 6b, the electrode terminal 50' according to another embodiment has a structure in which the inner flange portion 50c is inserted and deformed to be substantially parallel to the inner surface 52b of the second end face 52 of the battery can 51. Therefore, the angle formed by the surface of the inner flange portion 50c opposite to the inner surface 52b of the second end face 52 of the battery can 51 with the inner surface 52b is substantially close to o, and the height (H3) of the inner flange portion 53c is less than the height (H2) of the inner gasket 54b. In addition, the inner edge 57 of the perforation hole 53 has an arc shape with a predetermined curvature. In addition, the sidewall of the edge of the flat portion 50d has a structure inclined toward the flat portion 50d.

The thickness of the inner gasket 54b may gradually decrease upward, decrease to the minimum thickness near the end of the inner flange portion 53c, and then slightly increase toward the uppermost end. The compression structure of this inner gasket 54b may further improve the sealing properties of the electrode terminal 50'. The compression ratio of the inner gasket 54b can be calculated at the minimum thickness point near the end of the inner flange portion 53c.

The structure of the electrode terminal 50, 50' according to the embodiments of the present disclosure described above may be applied to a cylindrical battery cell having a form factor greater than 21700.

Recently, as the cylindrical battery cell is applied to an electric vehicle, the form factor of the cylindrical battery cell is increasing compared to the conventional form factor of 18650, 21700, and the like. An increase in the form factor leads to an increase in energy density, an increase in safety against thermal runaway, and an improvement in cooling efficiency.

In addition, as will be explained later, electrical wiring may be performed at one side of the cylindrical battery cell to which the structure of the electrode terminal 50, 50' is applied. In addition, the electrode terminal 50, 50' with a structure has a large sectional area and low resistance, so it is very suitable for rapid charging.

The cylindrical battery cell to which the structure of the electrode terminal 50, 50' of the present disclosure is applied may have a form factor ratio (defined as a value obtained by dividing the diameter of the cylindrical battery cell by height, namely a ratio of diameter (Φ) to height (H)) is greater than about 0.4.

Here, the form factor means a value indicating the diameter and height of a cylindrical battery cell. The cylindrical battery cell may be, for example, a 46110 cell, a 48750 cell, a 48110 cell, a 48800 cell, or a 46800 cell. In the numerical value representing the form factor, first two numbers indicate the diameter of the cell, next two numbers indicate the height of the cell, and the last number "o" indicates that the cross-section of the cell is circular. If the height of the cell exceeds 100 mm, the last number 0 can be omitted because a 3-digit number is needed to indicate the height of the cell.

A battery cell may be a cylindrical battery cell having an approximately cylindrical shape, whose diameter is approximately 46 mm, height is approximately 110 mm, and form factor ratio is 0.418.

A battery cell according to another embodiment may be a cylindrical battery cell having a substantially cylindrical shape, whose diameter is about 48 mm, height is about 75 mm, and form factor ratio is 0.640.

A battery cell according to still another embodiment may be a cylindrical battery cell having an approximately cylindrical shape, whose diameter is approximately 48 mm, height is approximately no mm, and form factor ratio is 0.418.

A battery cell according to still another embodiment may be a cylindrical battery cell having an approximately cylindrical shape, whose diameter is approximately 48 mm, height is approximately 80 mm, and form factor ratio is 0.600.

A battery cell according to still another embodiment may be a cylindrical battery cell having an approximately cylindrical shape, whose diameter is approximately 46 mm, height is approximately 80 mm, and form factor ratio is 0.575.

Conventionally, battery cells having a form factor ratio of about 0.4 or less have been used. That is, conventionally, for example, 18650 cell, 21700 cell, etc. were used. The 18650 cell has a diameter of approximately 18 mm, height of approximately 65 mm, and a form factor ratio of 0.277. The 21700 cell has a diameter of approximately 21 mm, a height of approximately 70 mm, and a form factor ratio of 0.300.

Referring to FIG. 6c, in order to satisfy the tensile force condition of the welding portion, the diameter of the welding pattern Wp formed on the flat portion 50d may be at least 2 mm. When the area (S) of the welding pattern Wp appearing on the surface of the welding portion is converted into an area ($\pi r^2$) of a circle, the diameter of the welding pattern Wp may be defined as a converted diameter ($2 \cdot (S/\pi)^{0.5}$) of the corresponding circle. The welding pattern Wp may be continuous or discontinuous. When the welding pattern Wp is not a circle, the converted diameter may be determined from a maximum value among distances between a center of the flat portion 50d and an outer boundary of the welding pattern Wp.

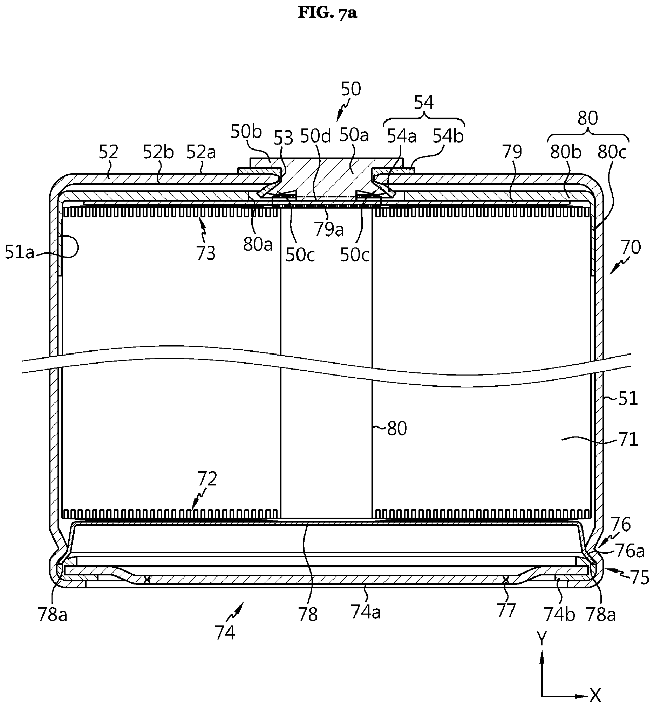

FIG. 7a is a sectional view showing a cylindrical battery cell 70, taken along a longitudinal direction (Y).

Referring to FIG. 7a, the cylindrical battery cell 70 according to the embodiment includes a jelly-roll type electrode assembly 71 in which a first electrode plate and a second electrode plate having a sheet shape are wound with a separator interposed therebetween so that an uncoated portion 72 of the first electrode plate is exposed at a lower portion and an uncoated portion 73 of the second electrode plate is exposed at an upper portion.

In an embodiment, the first electrode plate may be a negative electrode plate and the second electrode plate may be a positive electrode plate, or vice versa.

The method of winding the electrode assembly 71 is substantially the same as the method of winding the electrode assembly used in manufacturing the conventional tab-less cylindrical battery cell described with reference to FIG. 2.

In depicting the electrode assembly 71, only the uncoated portions 72, 73 extending to be exposed to the outside of the separator are illustrated in detail, and the winding structure of the first electrode plate, the second electrode plate and the separator is not illustrated in detail.

The cylindrical battery cell 70 also includes a cylindrical battery can 51 that accommodates the electrode assembly 71 and is electrically connected to the uncoated portion 72 of the first electrode plate.

Preferably, one side (lower portion) of the battery can 51 is open. In addition, the second end face 52 of the battery can 51 has a structure in which the electrode terminal 50 is inserted into the perforation hole 53 and deformed through a caulking process.

Specifically, the electrode terminal 50 may include a body portion 50a inserted into the perforation hole 53, an outer flange portion 50b extending along the outer surface 52a from the circumference of one side of the body portion 50a exposed through the outer surface 52a of the second end face 52 of the battery can 51, an inner flange portion 50c extending toward the inner surface 52b from the circumference of the other side of the body portion 50a exposed through the inner surface 52b of the second end face 52 of the battery can 51, and a flat portion 50d provided at an inner side of the inner flange portion 50c.

The electrode terminal 50 may be replaced with the electrode terminal 50' shown in FIG. 6b.

The cylindrical battery cell 70 may also include a gasket 54 interposed between the electrode terminal 50 and the perforation hole 53.

The cylindrical battery cell 70 may also include a sealing body 74 that seals the open end of the battery can 51 to be insulated from the battery can 51. The sealing body 74 may include a cap plate 74a having no polarity and a sealing gasket 74b interposed between an edge of the cap plate 74a and the open end of the battery can 51.

The cap plate 74a may be made of a conductive metal material such as aluminum, steel, nickel or the like. In addition, the sealing gasket 74b may be made of polypropylene, polybutylene terephthalate, polyethylene fluoride, or the like having insulation and elasticity. However, the present disclosure is not limited by the materials of the cap plate 74a and the sealing gasket 74b.

The cap plate 74a may include a vent notch 77 that ruptures when the pressure inside the battery can 51 exceeds a threshold. The vent notch 77 may be formed at both sides of the cap plate 74a. The vent notch 77 may form a continuous or discontinuous circular pattern, a straight pattern or any other pattern on the surface of the cap plate 74a. The depth and width of the vent notch 77 may be set such that the vent notch 77 is ruptured when the pressure inside the battery can 51 is in the range of 15 kgf/cm$^2$ to 35 kgf/cm$^2$.

The battery can 51 may include a crimping portion 75 that is extended and bent into the inside of the battery can 51 to surround and fix the edge of the cap plate 74a together with the sealing gasket 74b in order to fix the sealing body 74 to the battery can 51.

The lower surface of the cap plate 74a may be located above the lower end of the crimping portion 75. Then, a vent space is formed below the cap plate 74a, so that when the vent notch 77 is ruptured, the gas can be smoothly discharged.

The battery can 51 may also include a beading portion 76 pressed-in into the battery can 51 in a region adjacent the open end thereof. The beading portion 76 supports the edge of the sealing body 74, particularly the outer circumferential surface of the sealing gasket 74b, when the sealing body 74 is fixed by the crimping portion 75.

The cylindrical battery cell 70 may further include a first current collecting plate 78 welded to the uncoated portion 72 of the first electrode plate. The first current collecting plate 78 is made of a conductive metal material such as aluminum, steel, nickel or the like. At least a portion 78a of the edge of the first current collecting plate 78 not in contact with the uncoated portion 72 of the first electrode plate may be interposed between the beading portion 76 and the sealing gasket 74b and fixed by the crimping portion 75. Optionally, at least a portion 78a of the edge of the first current collecting plate 78 may be fixed to the inner circumference 76a of the beading portion 76 adj acent to the crimping portion 75 by a laser welding, a spot welding, an ultrasonic welding or the like.

The cylindrical battery cell 70 may also include a second current collecting plate 79 that is welded to the uncoated portion 73 of the second electrode plate. At least a portion of the second current collecting plate 79, for example a central portion 79a thereof, may be welded to the flat portion 50d of the electrode terminal 50.

Preferably, when the second current collecting plate 79 is welded, a welding tool may be inserted through the cavity 80 in the core of the electrode assembly 71 to reach a welding point of the second current collecting plate 79. In addition, when the second current collecting plate 79 is welded to the flat portion 50d of the electrode terminal 50, since the electrode terminal 50 supports the welding region of the second current collecting plate 79, it is possible to improve the welding quality by applying a strong pressure to the welding region. In addition, since the flat portion 50d of the electrode terminal 50 has a large area, a wide welding region may also be secured. Accordingly, the contact resistance of the welding region is lowered, thereby lowering the inner resistance of the cylindrical battery cell 70. The face-to-face welding structure of the riveted electrode terminal 50 and the second current collecting plate 79 is very useful for rapid charging using high C-rate current. This is because the current density per unit area may be lowered in the cross section in a direction in which the current flows and thus the amount of heat generated in the current path may be lowered than that of the prior art.

When welding the flat portion 50d of the electrode terminal 50 and the second current collecting plate 79, any one of laser welding, ultrasonic welding, spot welding, and resistance welding may be used.

In one example, when the flat portion 50d and the second current collecting plate 79 are laser-welded in a continuous or discontinuous line in the form of an arc pattern, the diameter of the arc welding pattern is 2 mm or more, or 4 mm or more. When the diameter of the arc welding pattern satisfies the corresponding conditions, it is possible to increase the tensile strength of the welding portion to 2 kgf or above, thereby securing sufficient welding strength.

In another example, when the flat portion 50d and the second current collecting plate 79 are ultrasonic-welded in a circular pattern, the diameter of the circular welding pattern may be 2 mm or more. When the diameter of the circular welding pattern satisfies the corresponding conditions, it is possible to increase the tensile strength of the welding portion to 2 kgf or above, thereby securing sufficient welding strength.

The diameter of the flat portion 50d corresponding to the weldable region may be adjusted in the range of 3 mm to 14 mm. If the radius of the flat portion 50d is less than 3 mm, it is difficult to form a welding pattern with a diameter of 2 mm or more using a laser welding tool, an ultrasonic welding tool, or the like. In addition, if the radius of the flat portion 50d exceeds 14 mm, the size of the electrode terminal 50 becomes excessively large, and the area occupied by the outer surface 52a of the second end face 52 of the battery can 51 is reduced, so that it is difficult to connect an electrical connection component (a bus bar) through the outer surface 52a.

Preferably, since the diameter of the welding pattern for securing the welding portion tensile strength to 2 kgf or more is 2 mm or more and the diameter of the weldable region is 3 mm to 14 mm, the area ratio of the welding pattern to the area of the weldable region maybe $2.04(100*\pi 1^2/\pi 7^2)\%$ to $44.4(100*\pi 1^2/\pi 1.5^2)\%$.

The cylindrical battery cell 70 may further include an insulator 80. The insulator 80 may be interposed between the second current collecting plate 79 and the inner surface 52a of the second end face 52 of the battery can 51, and between the inner circumference 51a of the sidewall of the battery can 51 and the electrode assembly 71.

The insulator 80 may have a welding hole 80a that exposes the flat portion 50d of the electrode terminal 50 toward the second current collecting plate 79. In addition, the welding hole 80a may expose the inner flange portion 50c and the inner gasket 54b together with the flat portion 50d of the electrode terminal.

The insulator 80 may cover the surface of the second current collecting plate 79 and one (upper) edge of the electrode assembly 71. By doing so, it is possible to prevent the second current collecting plate 79 having a polarity different from that of the battery can 51 from contacting the uncoated portion 73 of the second electrode plate.

The insulator 80 is made of an insulating resin, and may include an upper plate 80b and a side sleeve 80c. In one example, the upper plate 80b and the side sleeve 80c may be integrally formed by injection molding. Alternatively, the side sleeve 80c may be replaced with an insulation tape or the like. The insulation tape may cover the outer edge of the second current collecting plate 79 together with the uncoated portion 73 of the second electrode plate exposed through the outer circumference of the electrode assembly 71.

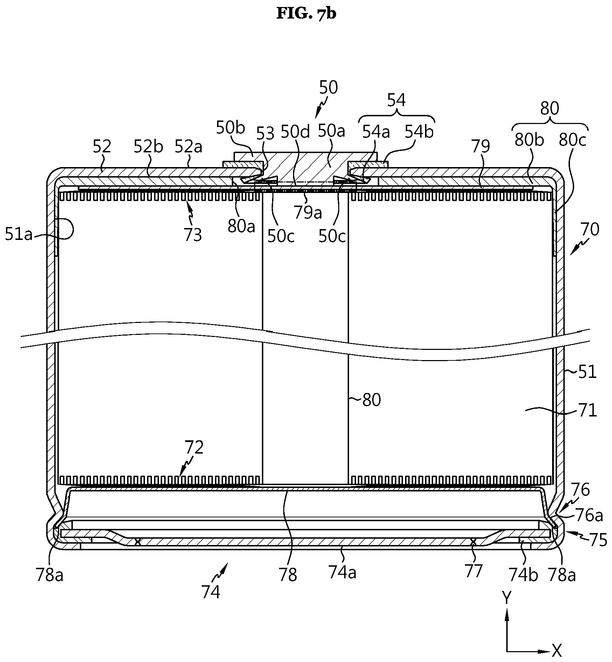

The inner surface 52b of the insulator 80 and the second end face 52 of the battery can 51 may be in close contact with each other as shown in FIG. 7b. Here, 'close contact' means that there is no space (gap) that is visually confirmed. In order to eliminate the space (gap), the distance from the inner surface 52b of the second end face 52 of the battery can 51 to the flat portion 50d of the electrode terminal 50 may be equal to or slightly smaller than the thickness of the insulator 80.

The uncoated portions 72, 73 of the first electrode plate and/or the second electrode plate may be bent in a radial direction, for example from the outer circumference of the electrode assembly 71 to the core, to form bent surfaces at the upper and lower portions of the electrode assembly 71. In addition, the first current collecting plate 78 may be welded to the bent surface formed by bending the uncoated portion 72 of the first electrode plate, and the second current collecting plate 79 may be welded to the bent surface formed by bending the uncoated portion 73 of the second electrode plate.

In order to relieve the stress generated when the uncoated portions 72, 73 are bent, the first electrode plate and/or the second electrode plate may have an improved structure different from that of the conventional electrode plate (see FIG. 1).

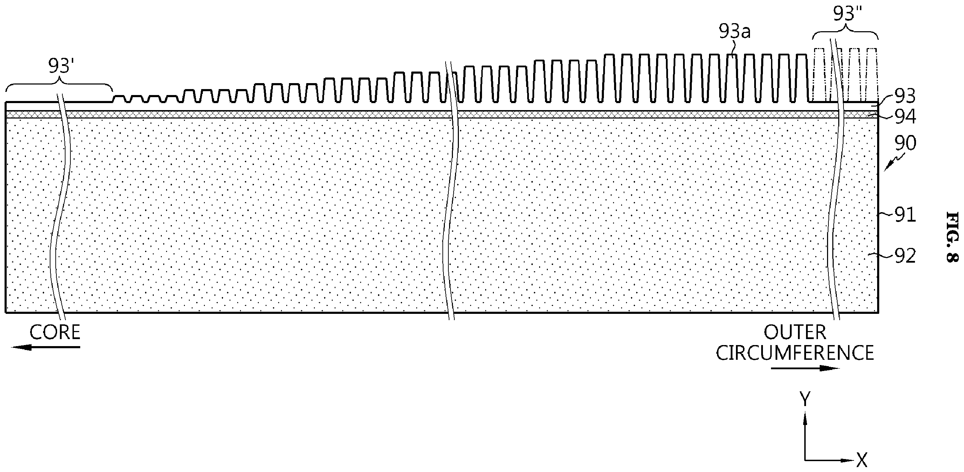

FIG. 8 is a plan view exemplarily showing a structure of an electrode plate 90.

Referring to FIG. 8, the electrode plate 90 has a sheet-shaped current collector 91 made of a conductive material foil, an active material layer 92 formed on at least one surface of the current collector 91, and an uncoated portion 93 formed at a long side end of the current collector 91 and not coated with an active material.

The uncoated portion 93 may include a plurality of notched segments 93a. The plurality of segments 93a constitute a plurality of groups, and the segments 93a included in each group may have the same height (length in the Y direction) and/or the same width (length in the X direction) and/or the same separation pitch. The number of segments 93a belonging to each group may be increased or decreased than shown. The segment 93a has a shape of a geometric figure in which at least one linear line and/or at least one curve are combined. The segment 93a may have a trapezoidal shape, which may be changed into a rectangular, parallelogram, semicircular, semi-elliptical shape, or the like as desired.

The height of the segment 93a may be increased stepwise along one direction parallel to the winding direction of the electrode assembly, for example from the core to the outer circumference. In addition, a core-side uncoated portion 93' adjacent to the core may not include the segment 93a, and the height of the core-side uncoated portion 93' may be smaller than that of other uncoated portion regions. Also, an outer circumferential uncoated portion 93" adjacent to the outer circumferential may not include the segment 93a, and the height of the outer circumferential uncoated portion 93" may be smaller than that of other uncoated portion regions.

Optionally, the electrode plate 90 may include an insulating coating layer 94 for covering the boundary between the active material layer 92 and the uncoated portion 93. The insulating coating layer 94 includes an insulating polymer resin, and may optionally include an inorganic filler further. The insulating coating layer 94 prevents the end of the active material layer 92 from coming into contact with the opposite-polarity active material layer opposite thereto through the separator, and serves to structurally support the bending of the segment 93a. To this end, when the electrode plate 90 is wound into an electrode assembly, it may advantageous that the insulating coating layer 94 is at least partially exposed from the separator to the outside.

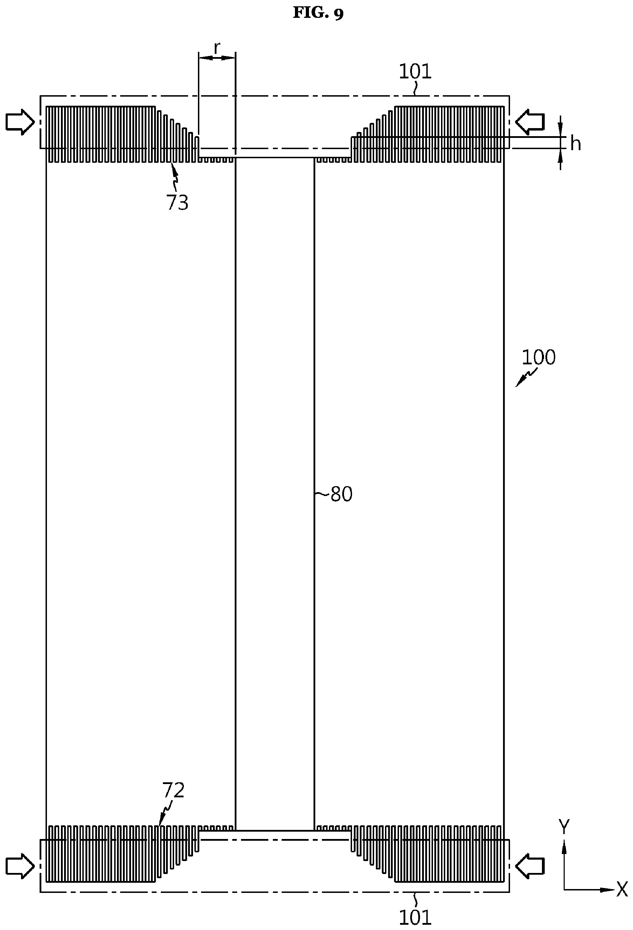

FIG. 9 is a sectional view showing an electrode assembly 100 in which a segment structure of an uncoated portion of the electrode plate 90 is applied to the first electrode plate and the second electrode plate, taken along the longitudinal direction (Y).

Referring to FIG. 9, the electrode assembly 100 may be manufactured by the winding method described with reference to FIG. 2. For convenience of explanation, the protruding structure of the uncoated portions 72, 73 extending out of the separator is illustrated in detail, and the winding structure of the first electrode plate, the second electrode plate and the separator is not illustrated in detail. The uncoated portion 72 protruding downward extends from the first electrode plate, and the uncoated portion 73 protruding upward extends from the second electrode plate.

The pattern in which the heights of the uncoated portions 72, 73 change is schematically shown. That is, the heights of the uncoated portions 72, 73 may vary irregularly depending on the position at which the cross-section is cut. For example, when the side portion of the trapezoidal segment 93a is cut, the height of the uncoated portion at the cross section is lower than the height of the segment 93a. Accordingly, it should be understood that the heights of the uncoated portions 72, 73 depicted in the drawing showing the cross-section of the electrode assembly 100 correspond to the average of the heights of the uncoated portions included in each winding turn.

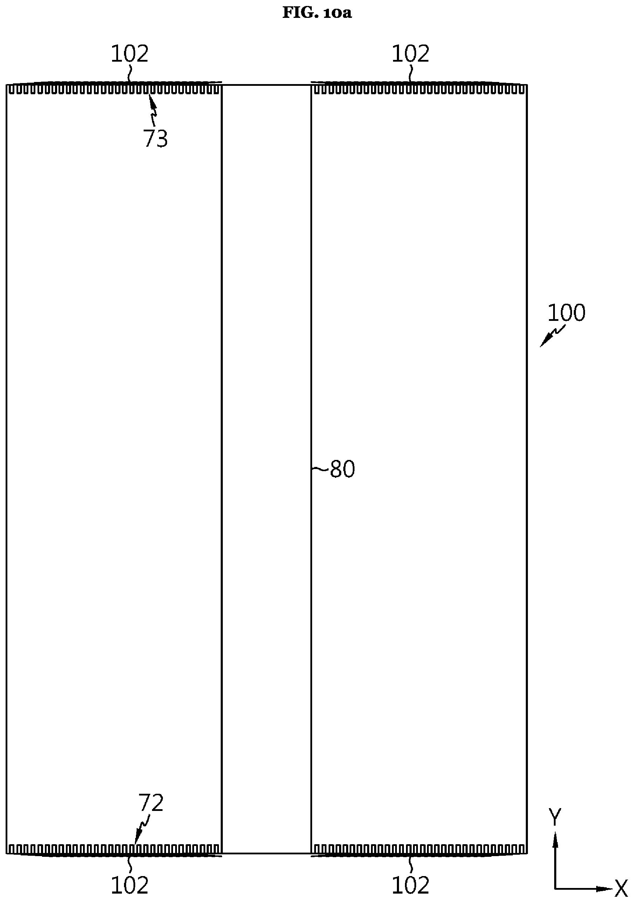

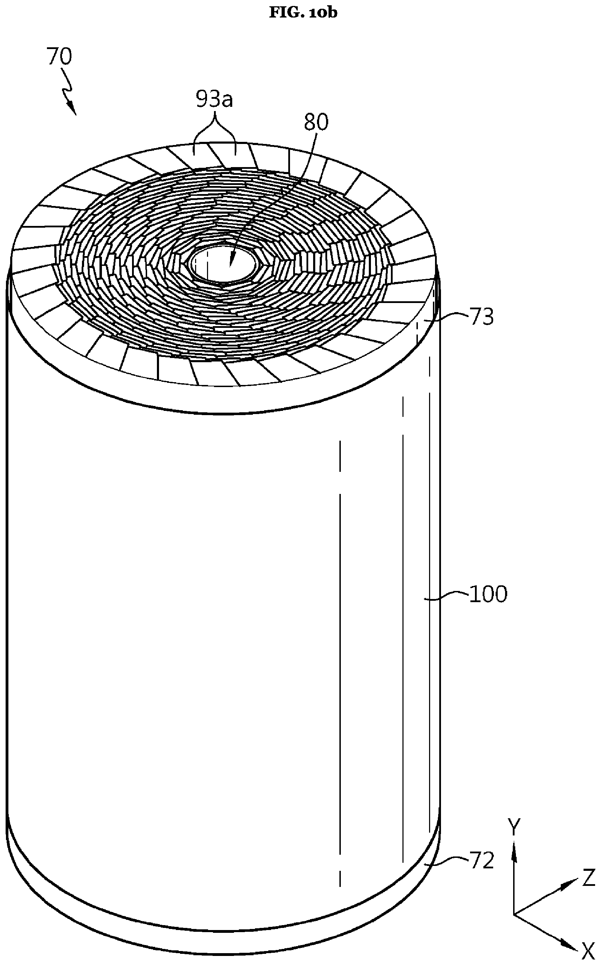

The uncoated portions 72, 73 may be bent along the radial direction of the electrode assembly 100, for example from the outer circumference to the core, as shown in FIGS. 10a and 10b. In FIG. 9, the bent portion 101 is indicated by a dotted line box. When the uncoated portions 72, 73 are bent, bent surfaces 102 are formed at the upper and lower portions of the electrode assembly 100 as the segments adjacent to each other in a radius direction overlap each other in multiple layers. At this time, the core-side uncoated portion 93' (see FIG. 8) is not bent due to its low height, and the height (h) of the segment bent at the innermost side is less than or equal to the radius-direction length (r) of the winding region formed by the core-side uncoated portion 93' with no segment structure. Therefore, the cavity 80 in the core of the electrode assembly 100 is not closed by the bent segments. If the cavity 80 is not closed, there is no difficulty in the electrolyte injection process, and the electrolyte injection efficiency is improved. In addition, the electrode terminal 50 and the second current collecting plate 79 may be easily welded by inserting a welding tool through the cavity 80.

In the cylindrical battery cell 70 according to the embodiment of the present disclosure, the cap plate 74a of the sealing body 74 has no polarity. Instead, the first current collecting plate 78 is connected to the sidewall of the battery can 51, so that the outer surface 52a of the second end face 52 of the battery can 51 has polarity opposite to the electrode terminal 50. Therefore, when a plurality of cells are to be connected in series and/or in parallel, wiring such as bus bar connection may be performed at the upper portion of the cylindrical battery cell 70 using the electrode terminal 50 and the outer surface 52a of the second end face 52 of the battery can 51. Through this, the energy density may be improved by increasing the number of cells that can be mounted in the same space, and the electric wiring work may be performed easily.

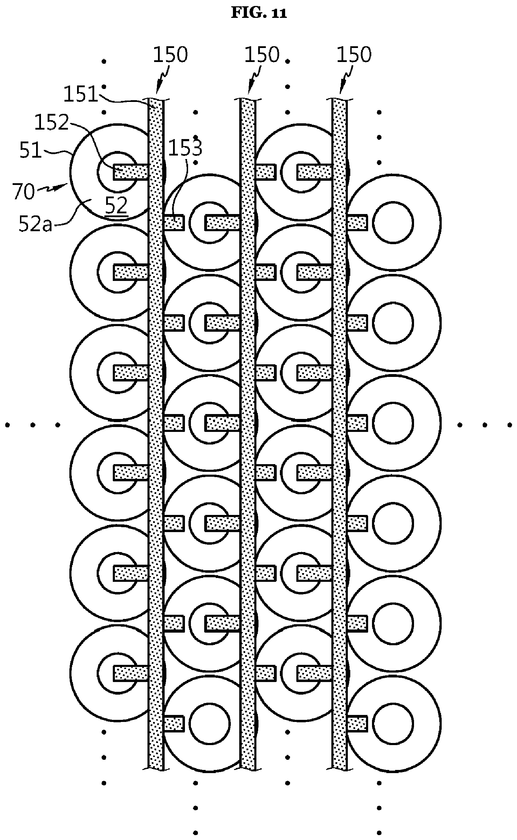

FIG. 11 is a diagram showing a state in which the cylindrical battery cells 70 are electrically connected using a bus bar 150.

Referring to FIG. 11, the plurality of cylindrical battery cells 70 may be connected in series and in parallel at an upper portion using the bus bar 150. The number of cylindrical battery cells 70 may be increased or decreased in consideration of the capacity of the battery pack.

In each cylindrical battery cell 70, the electrode terminal 50 may have a positive polarity, and the outer surface 52a of the second end face 52 of the battery can 51 may have a negative polarity, and vice versa.

The plurality of cylindrical battery cells 70 may be arranged in a plurality of columns and rows. Columns are provided in an upper and lower direction with respect to the ground, and rows are provided in a left and right direction with respect to the ground. Also, in order to maximize space efficiency, the cylindrical battery cells 70 may be arranged in a closest packing structure. The closest packing structure is formed when the centers of the electrode terminals 50 form an equilateral triangle when being connected to each other.

The bus bar 150 may be disposed above the plurality of battery cells, in particular between adjacent columns. Alternatively, the bus bar 150 may be disposed between adjacent rows.

The bus bar 150 connects cells arranged in the same column in parallel to each other, and serially connects cells arranged in two adjacent columns to each other.

Preferably, for serial and parallel connection, the bus bar 150 may include a body portion 151, a plurality of first bus bar terminals 152 and a plurality of second bus bar terminals 153.

The body portion 151 may extend between electrode terminals (50) of adjacent cylindrical battery cells 70, in particular between columns of the cylindrical battery cells 70. Alternatively, the body portion 151 may extend along a column of cylindrical battery cells 70 and may be regularly bent like a zigzag shape.

The plurality of first bus bar terminals 152 may protrude from one side of the body portion 151 toward the electrode terminal 50 of each cylindrical battery cell 70 and may be electrically coupled to the electrode terminal 50. Electrical coupling with the electrode terminal 50 may be achieved through laser welding, ultrasonic welding, or the like. In addition, the plurality of second bus bar terminals 153 may protrude from the other side of the body portion 151 toward the outer surface 52a of the second end face 52 of the battery can 51 of each cylindrical battery cell 70, and may be electrically coupled to the outer surface 52a. Electrical coupling with the outer surface 52a may be performed by laser welding, ultrasonic welding, or the like.

The body portion 151, the plurality of first bus bar terminals 152 and the plurality of second bus bar terminals 153 may be made of one conductive metal plate. The metal plate may be an aluminum plate or a copper plate, but the present disclosure is not limited thereto. In a modified example, the body portion 151, the plurality of first bus bar terminals 152 and the plurality of second bus bar terminals 153 may be manufactured as separate pieces and then coupled to each other through welding or the like.

In the cylindrical battery cell 70 according to the present disclosure, the electrode terminal 50 having a positive polarity and the outer surface 52a of the second end face 52 of the battery can 51 having a negative polarity are located in the same direction, and thus the cylindrical battery cells 70 may be electrically connected easily using the bus bar 150.

In addition, since the electrode terminal 50 and the outer surface 52a of the cylindrical battery cell 70 have a large area, the coupling area of the bus bar 150 may be sufficiently secured to sufficiently reduce the resistance of the battery pack including the cylindrical battery cell 70.

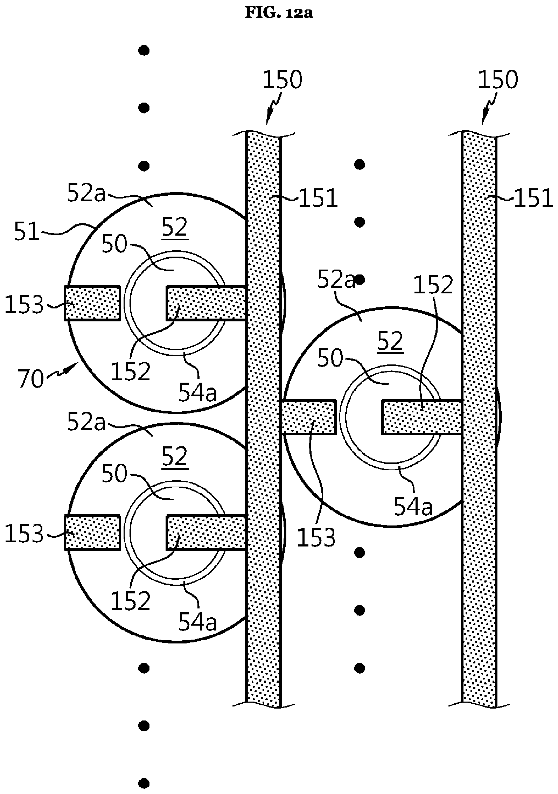

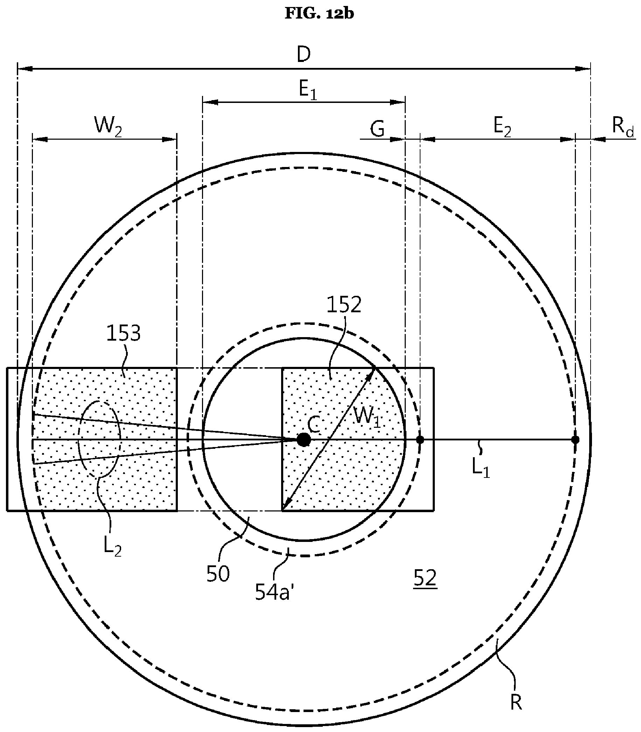

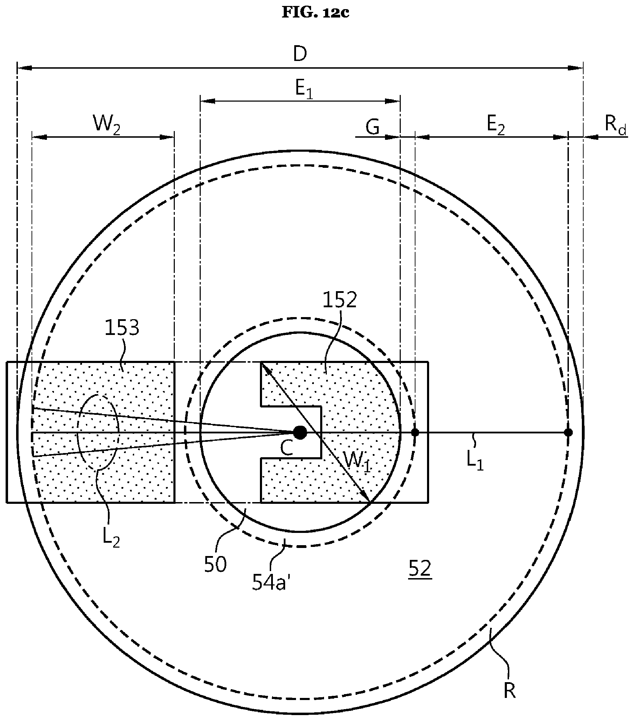

FIG. 12a is a partially enlarged view showing an electrical connection portion between the bus bar 150 and the cylindrical battery cell 70, and FIGS. 12b and 12c are diagrams showing the definition of various parameters to design upper and lower limits of the diameter of the electrode terminal 50 and the exposure width of the outer surface 52a in consideration of the sizes of the bus bar terminals 152, 153.

Referring to FIGS. 12a, 12b and 12c, in the cylindrical battery cell 70, the diameter ($E_1$) of the electrode terminal 50 and the width ($E_2$) of the ring-shaped outer surface 52a may be adaptively adjusted in consideration of the dimensions of the contact areas of the bus bar terminals 152, 153.

Here, the width E2 of the outer surface 52a is the width of the exposed surface parallel to the surface of the electrode terminal 50. Specifically, the width E2 of the outer surface 52a is defined as the width of a line segment connecting two points where a linear line ($L_1$) drawn in a radial direction from the center C of the electrode terminal 50 intersects inner and outer boundaries of the outer surface 52a. The width E2 of the outer surface 52a is the width of the flat exposed surface excluding the round region existing at the edge of the second end face 52 and the exposed area 54a' of the outer gasket 54a.

The outer surface of the second end face 52 of the battery can 51 may be divided into the electrode terminal 50, the exposed area 54a' of the gasket 54, and the round region R at the edge of the outer surface 52a when viewed from the top. The round region R is a processing region (see FIGS. 7a and 7b) for smoothly connecting the second end face 52 of the battery can 51 and the sidewall of the battery can 51, and has a width ($R_d$) on a plane.

The first bus bar terminal 152 of the bus bar 150 is branched to one side different from the traveling direction of the body portion 151, and is electrically coupled to the electrode terminal 50. At this time, the electrode terminal 50 and the first bus bar terminal 152 form a first overlapping region (hatched in the drawing) on a plane, and the first overlapping region has a first width ($W_1$). Here, the first overlapping region is a region where the electrode terminal 50 and the first bus bar terminal 152 overlap on a plane.

The first width ($W_1$) is defined as a maximum value among distances between any two points selected in the edge of the first overlapping region. The definition of the first width ($W_1$) is applied identically when the first overlapping region includes the center of the electrode terminal 50 (FIG. 12b) and when the first overlapping region does not include the center of the electrode terminal 50 (FIG. 12c). Referring to FIGS. 12b and 12c, the distance represented by $W_1$ corresponds to a maximum value among distances between any two points selected in the edge of the first overlapping region.

The second bus bar terminal 153 of the bus bar 150 extends in a direction opposite to the first bus bar terminal 152 based on the traveling direction of the body portion 151, and is electrically coupled to the outer surface 52a of the second end face 52 of the battery can 51. At this time, the second bus bar terminal 153 and the outer surface 52a form a second overlapping region (hatched on the figure) on a plane, and the second overlapping region has a second width ($W_2$). Here, the second overlapping region is a region where the outer surface 52a and the second bus bar terminal 153 overlap on a plane.

The second width ($W_2$) is defined as a maximum value among widths between two points where each linear line and the edge of the second overlapping region meet when a plurality of linear lines ($L_3$) are drawn from the center C of the electrode terminal 50 to pass through the second overlapping region.

The diameter ($E_1$) of the electrode terminal 50 must be at least equal to or greater than the first width ($W_1$) of the first bus bar terminal 152. This is because the first overlapping region of the first bus bar terminal 152 and the electrode terminal 50 must not deviate out of the electrode terminal 50 on the plane. Also, the diameter ($E_1$) of the electrode terminal 50 may be increased to the maximum until the distance between the boundary of the electrode terminal 50 and the second bus bar terminal 153 corresponds to the width (G) of the exposed area 54a' of the outer gasket 54a. Therefore, the maximum value of the diameter ($E_1$) of the electrode terminal 50 is 'D-2*$R_d$-2*G-2*$W_2$'.

The width ($E_2$) of the outer surface 52a is a factor dependent on the diameter ($E_1$) of the electrode terminal 50, and must be at least equal to or greater than the second width ($W_2$) of the second bus bar terminal 153. Only in this case, an overlapping region of the second bus bar terminal 153 and the outer surface 52a may be formed. In addition, the width ($E_2$) of the outer surface 52a may be increased to the maximum up to 50% of 'D-2*$R_d$-2*G-$E_1$', which is a value obtained by subtracting the diameter ($E_1$) of the electrode terminal 50, the width (2*G) of the exposed area of the outer gasket 54a, and the width (2*$R_d$) of the round region from the outer diameter (D) of the battery can 51.

In conclusion, in the cylindrical battery cell 70 according to the present disclosure, it may be advantageous that the diameter ($E_1$) of the electrode terminal 50 and the width ($E_2$) of the outer surface 52a are designed to satisfy the following relational expression.

$$W_1 \leq E_1 \leq D\text{-}2R_d\text{-}2G\text{-}2W_2$$

$$E_2 = 0.5^*(D\text{-}2R_d\text{-}2G\text{-}E_1)$$

($E_1$: diameter of the electrode terminal 50, $E_2$: width of the outer surface 52a, D: outer diameter of the battery can 51, $R_d$: width of the round region R measured on a plane, G: width of the exposed area 54a' of the outer gasket 54a, $W_1$: width of the first bus bar terminal 152, $W_2$: width of the second bus bar terminal 153)

In a specific example, when D is 46 mm, $W_1$ and $W_2$ are 6 mm, G is 0.5 mm, and R is 1 mm, the diameter ($E_1$) of the electrode terminal 50 is 6 mm to 31 mm, and the width ($E_2$) of the outer surface 52a is 6 mm to 18.5 mm.

As another example, when D is 46 mm, $W_1$ and $W_2$ are 6 mm, G is 0.5 mm and $R_d$ is 1.5 mm, the diameter ($E_1$) of the electrode terminal 50 is 6 mm to 30 mm and the width ($E_2$) of the outer surface 52a is 6 mm to 18 mm.

As described above, the cylindrical battery cell 70 of the present disclosure has a structure in which resistance is minimized by expanding a welding area through a bent surface of the uncoated portion, multiplexing a current path by using a first current collecting plate, minimizing a current path length, and the like. The AC resistance of the cylindrical battery cell 70 measured using a resistance measuring instrument between the electrode terminal 50 (positive-polarity terminal) and the outer surface 52a (negative-polarity terminal) near the electrode terminal 50 may be about 4 milliohms (mΩ) or less, which is appropriate to quick charging. The resistance may be 0.5 mΩ or more, or 1.0 mΩ or more.

In the present disclosure, a positive electrode active material coated on the positive electrode plate and a negative electrode active material coated on the negative electrode plate may employ any active material known in the art without limitation.

In one example, the positive electrode active material may include an alkali metal compound expressed by a general formula $A[A_xM_y]O_{2+z}$ (A includes at least one element among Li, Na and K; M includes at least one element selected from is Ni, Co, Mn, Ca, Mg, Al, Ti, Si, Fe, Mo, V, Zr, Zn, Cu, Al, Mo, Sc, Zr, Ru, and Cr; $x \geq 0$, $1 \leq x+y \leq 2$, $-0.1 \leq z \leq 2$; and the stoichiometric coefficients x, y and z are selected so that the compound maintains electrical neutrality).

In another example, the positive electrode active material may be an alkali metal compound $xLiM^1O_2\text{-}(1\text{-}x)Li_2M^2O_3$ disclosed in US6,677,082, US6,680,143, et al., wherein $M^1$ includes at least one element having an average oxidation state 3; $M^2$ includes at least one element having an average oxidation state 4; and $0 \leq x \leq 1$).

In still another example, the positive electrode active material may be lithium metal phosphate expressed by a general formula $Li_aM^1_xFe_{1\text{-}x}M^2_yP_{1\text{-}y}M3_zO_{4\text{-}z}$ ($M^1$ includes at least one element selected from the Ti, Si, Mn, Co, Fe, V, Cr, Mo, Ni, Nd, Al, Mg and Al; $M^2$ includes at least one element selected from Ti, Si, Mn, Co, Fe, V, Cr, Mo, Ni, Nd, Al, Mg, Al, As, Sb, Si, Ge, V and S; M3 includes a halogen element optionally including F; $0 < a \leq 2$, $0 \leq x \leq 1$, $0 \leq y < 1$, $0 \leq z < 1$; the stoichiometric coefficients a, x, y and z are selected so that the compound maintains electrical neutrality), or $Li_3M_2(PO_4)_3$ (M includes at least one element selected from Ti, Si, Mn, Fe, Co, V, Cr, Mo, Ni, Al,

Mg and AI).

The positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as $TiO_2$ and $SnO_2$ with a potential of less than 2V may also be used as the negative electrode active material. As the carbon material, low-crystalline carbon and/or high-crystalline carbon may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

A coating layer of inorganic particles may be included in at least one surface of the separator. It is also possible that the separator itself is made of a coating layer of inorganic particles. Particles in the coating layer may be coupled with a binder so that an interstitial volume exists between adjacent particles.

The inorganic particles may be made of an inorganic material having a dielectric constant of 5 or more. As a non-limiting example, the inorganic particles may include at least one material selected from the group consisting of $Pb(Zr,Ti)O_3$ (PZT), $Pb_{1-x}La_xZr_{1-y}Ti_yO_3$ (PLZT), $PB(Mg_3Nb_{2/3})O_3$-$PbTiO_3$ (PMN-PT), $BaTiO_3$, hafnia ($HfO_2$), $SrTiO_3$, $TiO_2$, $Al_2O_3$, $ZrO_2$, $SnO_2$, $CeO_2$, MgO, CaO, ZnO and $Y_2O_3$.

The electrolyte may be a salt having a structure like $A^+B^-$. Here, A+ includes an alkali metal cation such as Li+, $Na^+$, or K+, or a combination thereof. and B⁻ includes at least one anion selected from the group consisting of F⁻, Cl-, Br-, I-, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, SCN- and $(CF_3CF_2SO_2)_2N^-$.

The electrolyte may also be dissolved in an organic solvent. The organic solvent may employ propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof.

The cylindrical battery cell 70 according to the above embodiment may be used to manufacture a battery pack.

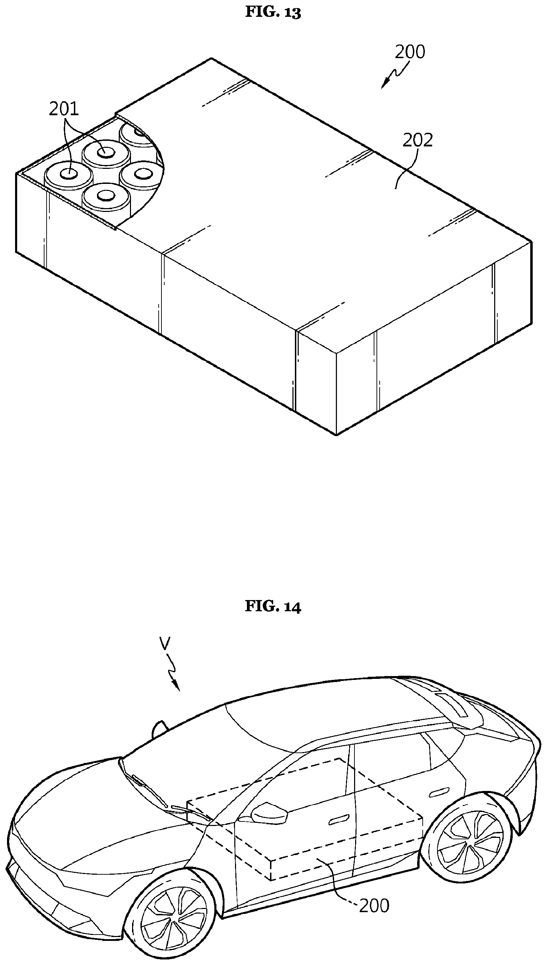

FIG. 13 is a diagram schematically showing a battery pack .

Referring to FIG. 13, a battery pack 200 includes an aggregate in which cylindrical battery cells 201 are electrically connected, and a pack housing 202 for accommodating the aggregate. The cylindrical battery cell 201 is the battery cell according to the above embodiment. In the drawing, components such as a bus bar, a cooling unit, and an external terminal for electrical connection of the cylindrical battery cells 201 are not depicted for convenience of illustration.

The battery pack 200 may be mounted to a vehicle. The vehicle may be, for example, an electric vehicle, a hybrid electric vehicle, or a plug-in hybrid vehicle. The vehicle includes a four-wheeled vehicle or a two-wheeled vehicle.

FIG. 14 is a diagram for illustrating a vehicle including the battery pack 200 of FIG. 13.

Referring to FIG. 14, a vehicle V includes the battery pack 200. The vehicle V operates by receiving power from the battery pack 200 .

The present disclosure has been described in detail. However, it should be understood that the detailed description and specific examples are given by way of illustration only, since various changes and modifications within the scope of the disclosure will become apparent to those skilled in the art from this detailed description.

In view of the above, it will be appreciated that the present invention also relates to the following itemized embodiments:

ITEM 1. A riveting structure of an electrode terminal, comprising:

a battery can configured to have one open side;
an electrode terminal riveted through a perforation hole formed in a bottom of the battery can; and
a rivet gasket interposed between the electrode terminal and the perforation hole,
wherein the electrode terminal includes:

a body portion inserted into the perforation hole;
an outer flange portion configured to extend along an outer surface of the bottom of the battery can from a circumference of one side of the body portion exposed through the outer surface;
an inner flange portion configured to extend toward an inner surface of the bottom of the battery can from a circumference of the other side of the body portion exposed through the inner surface; and
a flat portion provided to an inner side of the inner flange portion.

ITEM 2. The riveting structure of an electrode terminal according to item 1, wherein the flat portion is parallel with the inner surface of the bottom.

ITEM 3. The riveting structure of an electrode terminal according to any of items 1 and 2, wherein an angle between the inner flange portion and the inner surface of the bottom is 0° to 60°.

ITEM 4. The riveting structure of an electrode terminal according to any of items 1 to 3, wherein a recess is provided between the inner flange portion and the flat portion.

ITEM 5. The riveting structure of an electrode terminal according to any of items 1 to 4, wherein the recess has a sectional structure of an asymmetric groove.

ITEM 6. The riveting structure of an electrode terminal according to any of items 1 to 5, wherein the asymmetric groove includes a sidewall of the flat portion and an inclined surface of the inner flange portion connected to an end of the sidewall.

ITEM 7. The riveting structure of an electrode terminal according to any of items 1 to 6, wherein the sidewall is perpendicular to the inner surface of the bottom.

ITEM 8. The riveting structure of an electrode terminal according to any of items 1 to 6, wherein the sidewall is inclined toward the flat portion.

ITEM 9. The riveting structure of an electrode terminal according to any of items 1 to 10, wherein the inner flange portion has a thickness gradually decreasing as being farther away from the body portion.

ITEM 10. The riveting structure of an electrode terminal according to any of items 1 to 11, wherein the rivet gasket includes: an outer gasket interposed between the outer flange portion and the outer surface of the bottom, and an inner gasket interposed between the inner flange portion and the inner surface of the bottom, wherein the inner gasket has different thicknesses depending on locations thereof.

ITEM 11. The riveting structure of an electrode terminal according to any of items 1 to 10, wherein a region of the inner gasket interposed between an inner edge of the perforation hole connected to the inner surface of the bottom and the inner flange portion has a relatively smaller thickness than the other region.

ITEM 12. The riveting structure of an electrode terminal according to any of items 1 to 11, wherein a region of the inner gasket interposed between the perforation hole and the body portion has a thickness gradually decreasing as being farther from than the outer flange portion.

ITEM 13. The riveting structure of an electrode terminal according to any of items 1 to 12, wherein a region of the inner gasket interposed between the inner surface of the bottom and a region near an end of the inner flange portion has a smallest thickness.

ITEM 14. The riveting structure of an electrode terminal according to any of items 1 to 13, wherein the inner edge of the perforation hole includes a facing surface that faces the inner flange portion.

ITEM 15. The riveting structure of an electrode terminal according to any of items 1 to 14, wherein the inner gasket is configured to extend longer than the inner flange portion so that an end thereof is exposed.

ITEM 16. The riveting structure of an electrode terminal according to any of items 1 to 15, wherein a height of the flat portion is equal to or larger than a height of an end of the inner gasket based on the inner surface of the bottom.

ITEM 17. The riveting structure of an electrode terminal according to any of items 1 to 16, wherein a height of the flat portion is equal to or larger than a height of the inner flange portion based on the inner surface of the bottom.

ITEM 18. The riveting structure of an electrode terminal according to any of items 1 to 17, wherein a height of the inner flange portion is larger than a height of an end of the inner gasket based on the inner surface of the bottom.

ITEM 19. The riveting structure of an electrode terminal according to any of items 1 to 18, wherein a height of the inner flange portion is 0.5 mm to 3.0 mm based on the inner surface of the bottom of the battery can.

ITEM 20. The riveting structure of an electrode terminal according to any of items 1 to 19, wherein a height of the electrode terminal extending from a lower surface of the outer flange portion to a surface of the flat portion is 4 mm to 7 mm.

ITEM 21. The riveting structure of an electrode terminal according to any of items 1 to 20, wherein a height of the outer flange portion is 0.8 mm or more based on the outer surface of the bottom of the battery can.

ITEM 22. The riveting structure of an electrode terminal according to any of items 1 to 21, wherein at least a portion of the outer gasket is exposed to the outside of the outer flange portion, and an exposure width of the outer gasket measured in a direction parallel to the outer surface of the bottom of the battery can is 0.1 mm to 1 mm.

ITEM 23. The riveting structure of an electrode terminal according to any of items 1 to 22, wherein a radius from a center of the body portion to an edge of the outer flange portion is 10% to 70% of a radius of the bottom of the battery can.

ITEM 24. The riveting structure of an electrode terminal according to any of items 1 to 23, wherein a radius from a center of the body portion to an edge of the flat portion is 4% to 30% of a radius of the bottom.

ITEM 25. The riveting structure of an electrode terminal according to any of items 1 to 24, wherein when a ratio of thickness change at a maximum compression point compared to a thickness before compression of the gasket is defined as a compression ratio, the compression ratio of the inner gasket is 30% to 90%.

ITEM 26. The riveting structure of an electrode terminal according to any of items 1 to 25, wherein the inner gasket includes polybutylene terephthalate, polyethylene fluoride, or polypropylene, and the compression ratio of the inner gasket is 50% to 90%.

ITEM 27. A cylindrical battery cell, comprising:

an electrode assembly in which a first electrode plate and a second electrode plate having a sheet shape are wound with a separator interposed therebetween, the electrode assembly having an uncoated portion of the first electrode plate and an uncoated portion of the second electrode plate configured to extend from both ends thereof and exposed to the outside of the separator;
a cylindrical battery can configured to accommodate the electrode assembly and electrically connected to the first electrode plate;
an electrode terminal riveted through a perforation hole formed in a bottom of the battery can and electrically connected to the second electrode plate;
the electrode terminal including:

a body portion inserted into the perforation hole;
an outer flange portion configured to extend along an outer surface of the bottom of the battery can from a circumference of one side of the body portion exposed through the outer surface;
an inner flange portion configured to extend toward an inner surface of the bottom of the battery can from a circumference of the other side of the body portion exposed through the inner surface; and
a flat portion provided to an inner side of the inner flange portion,

a rivet gasket interposed between the electrode terminal and the perforation hole; and
a sealing body configured to seal an open end of the battery can so as to be insulated from the battery can.

ITEM 28. The cylindrical battery cell according to any of item 27, wherein the battery can includes a beading portion formed in a region adjacent to the open end and pressed-in into the battery can, and the sealing body includes a cap plate having no polarity and a sealing gasket interposed between an edge of the cap plate and the open end of the battery can.

ITEM 29. The cylindrical battery cell according to any of items 27 and 28, wherein the battery can further includes a crimping portion extended and bent into the inside of the battery can and configured to surround and fix the edge of the cap plate together with the sealing gasket.

ITEM 30. The cylindrical battery cell according to any of items 27 to 29, wherein the cap plate includes a vent notch that ruptures when a pressure inside the battery can exceeds a threshold.

ITEM 31. The cylindrical battery cell according to any of items 27 to 30, wherein the vent notch is ruptured when the pressure inside the battery can is in the range of 15 kgf/cm$^2$ to 35 kgf/cm$^2$.

ITEM 32. The cylindrical battery cell according to any of items 27 to 31, further comprising: a first current collecting plate coupled to the uncoated portion of the first electrode plate, wherein at least a part of an edge of the first current collecting plate not in contact with the uncoated portion of the first electrode plate is interposed between the beading portion and the sealing gasket and fixed by the crimping portion.

ITEM 33. The cylindrical battery cell according to any of items 27 to 32, wherein at least a part of the edge of the first current collecting plate is fixed to an inner circumference of the beading portion adjacent to the crimping portion by welding.

ITEM 34. The cylindrical battery cell according to any of items 27 to 33, further comprising: a second current collecting plate coupled to the uncoated portion of the second electrode plate, wherein at least a part of the second current collecting plate is coupled to the flat portion of the electrode terminal.

ITEM 35. The cylindrical battery cell according to any of items 27 to 34, wherein the second current collecting plate and the flat portion of the electrode terminal are coupled through welding, and a tensile force of the welding portion between the second current collecting plate and the flat portion of the electrode terminal is 2 kgf or above.

ITEM 36. The cylindrical battery cell according to any of items 27 to 35, wherein a converted diameter of the welding pattern exposed on a surface of the second current collecting plate is 2 mm or more.

ITEM 37. The cylindrical battery cell according to any of items 127 to 36, wherein a diameter of the flat portion of the electrode terminal is 3 mm to 14 mm.

ITEM 38. The cylindrical battery cell according to any of items 27 to 37, wherein a ratio of an area of the welding pattern exposed on a surface of the second current collecting plate to an area of the flat portion of the electrode terminal is 2.04% to 44.4%.

ITEM 39. The cylindrical battery cell according to any of items 27 to 38, further comprising: an insulator interposed between the second current collecting plate and an inner circumference of the bottom of the battery can and between an inner circumference of a sidewall of the battery can and the electrode assembly.

ITEM 40. The cylindrical battery cell according to any of items 27 to 39, wherein the insulator has a welding hole formed to expose the flat portion of the electrode terminal toward the second current collecting plate and covers a surface of the second current collecting plate and an edge of one side of the electrode assembly.

ITEM 41. The cylindrical battery cell according to any of items 27 to 40, wherein a height from the inner surface of the bottom of the battery can to the flat portion of the electrode terminal is equal to or smaller than a thickness of the insulator.

ITEM 42. The cylindrical battery cell according to any of items 27 to 41, wherein the rivet gasket includes: an outer gasket interposed between the outer flange portion and the outer surface of the bottom of the battery can; and an inner gasket interposed between the inner flange portion and the inner surface of the bottom of the battery can.

ITEM 43. The cylindrical battery cell according to any of items 27 to 42, wherein an end of the inner gasket is exposed to the outside of the inner flange portion.

ITEM 44. The cylindrical battery cell according to any of items 27 to 43, wherein the welding hole exposes the flat portion of the electrode terminal and the inner flange portion.

ITEM 45. The cylindrical battery cell according to any of items 27 to 44, wherein the welding hole exposes the flat portion of the electrode terminal, the inner flange portion and the inner gasket.

ITEM 46. The cylindrical battery cell according to any of items 27 to 45, wherein a first bus bar terminal is electrically coupled to a surface of the electrode terminal, and a second bus bar terminal is electrically coupled to the outer surface of the bottom of the battery can.

ITEM 47. The cylindrical battery cell according to any of items 27 to 46, wherein the first bus bar terminal overlaps with the electrode terminal on a plane to form a first overlapping region, and the second bus bar terminal overlaps with the outer surface of the bottom of the battery can to form a second overlapping region, and a diameter of the electrode terminal and a width of the outer surface of the bottom of the battery can satisfy the following relational expression,

$$W1 \leq E1 \leq D-2Rd-2G-2W2$$

$$E2 = 0.5*(D-2Rd-2G-E1)$$

E1: diameter of the electrode terminal, E2: width of an exposed surface parallel to a surface of the electrode terminal in the outer surface of the bottom of the battery can, D: outer diameter of the battery can, Rd: width of a round region at an edge of the battery can measured on a plane, G: exposure width of the outer gasket through an edge of the electrode terminal, W1: maximum value among distances between any two points selected in an edge of the first overlapping region, W2: maximum value among distances between two points where a plurality of linear lines passing through the center of the electrode terminal meet an edge of the second overlapping region.

ITEM 48. The cylindrical battery cell according to any of items 27 to 47, wherein a form factor ratio obtained by dividing a diameter of the cylindrical battery cell by height is greater than 0.4.

ITEM 49. A battery pack, comprising a plurality of cylindrical battery cells according to any one of any of items 27 to 48.

ITEM 50. The battery pack according to item 49, wherein the plurality of cylindrical battery cells are arranged in a predetermined number of columns, and the electrode terminal and the outer surface of the bottom of the battery can of each cylindrical battery cell are disposed to face upward.

ITEM 51. The battery pack according to any of items 49 and 50, further comprising:

a plurality of bus bars configured to connect the plurality of cylindrical battery cells in series and in parallel,
wherein the plurality of bus bars are disposed above the plurality of cylindrical battery cells,
wherein each bus bar includes:

a body portion configured to extend between electrode terminals of adjacent cylindrical battery cells;
a plurality of first bus bar terminals respectively configured to extend in one side direction from the body portion and electrically coupled to the electrode terminal of the cylindrical battery cell located in the one side direction; and
a plurality of second bus bar terminals respectively configured to extend in the other side direction from the body portion and electrically coupled to the outer surface of the bottom of the battery can of the cylindrical battery cell located in the other side direction.

ITEM 52. The battery pack according to any of items 49 to 51, wherein an AC resistance of the cylindrical battery cell measured between the electrode terminal and the outer surface of the bottom of the battery can is 4 milliohms (mΩ) or less.

ITEM 53. A vehicle, comprising at least one battery pack according to any one of any of items 49 to 52.

**Claims**

1. A structure, comprising:

a battery can having a first end face and a second end face opposite to each other, wherein the first end face is open;
an electrode terminal passing through a perforation hole formed in the second end face of the battery can; and
a gasket interposed between the electrode terminal and the perforation hole,
wherein the electrode terminal includes:

- a body portion passing through the perforation hole;
- an outer flange portion extending from the body portion along an outer surface of the second end face of the battery can;
- an inner flange portion arranged inside the battery can and extending outwardly from the body portion; and
- a flat portion arranged in the battery can and surrounded by the inner flange portion.

2. The structure according to claim 1,
wherein the flat portion is parallel with the inner surface of the second end face of the battery can.

3. The structure according to claim 1 or 2,
wherein an angle between the inner flange portion and the inner surface of the second end face is 0° to 60°.

4. The structure according to any of the preceding claims,
wherein a recess is provided between the inner flange portion and the flat portion.

5. The structure according to claim 4,
wherein the recess has a cross-section of an asymmetric groove.

6. The structure according to claim 5,
wherein the asymmetric groove is formed between a sidewall of the body portion extending from the flat portion, and an inclined surface of the inner flange portion.

7. The structure according to claim 6,
wherein the sidewall is perpendicular to the inner surface of the second end face of the battery can.

8. The structure according to claim 6,
wherein the body portion tapers in a direction from the second end face of the battery can to the flat portion.

9. The structure according to any of the preceding claims,
wherein the inner flange portion has a thickness that decreases as being farther away from the body portion.

10. The structure according to any of the preceding claims, wherein the gasket includes:

an outer gasket interposed between the outer flange portion and the outer surface of the second end face of the battery can; and

an inner gasket interposed between the inner flange portion and the inner surface of the second end face of the battery can,

wherein a thickness of the inner gasket varies in an outward direction.

11. The structure according to claim 10,
wherein a thickness of the inner gasket is smaller between an edge of the perforation hole and the inner flange portion than a thickness of a rest of the inner gasket.

12. The structure according to claim 10 or 11,
wherein a region of the inner gasket interposed between the perforation hole and the body portion has a thickness that decreases as being farther from than the outer flange portion.

13. The structure according to any of claims 10 to 12,
wherein the thickness of the inner gasket is at minimum at an end of the inner flange portion.

14. The structure according to any of claims 10 to 14,
wherein the edge of the perforation hole includes a surface that faces the inner flange portion.

15. The structure according to any of claims 10 to 14,
wherein the inner gasket extends further from the body portion than the inner flange portion so that an end portion of the inner gasket is exposed.

16. The structure according to any of claims 10 to 15,
wherein a distance of the flat portion from the inner surface of the second end face of the battery can is equal to or larger than a height of an end of the inner gasket from the inner surface of the second end face of the battery can.

17. The structure according to any of the preceding claims,
wherein a height of the flat portion is equal to or larger than a height of the inner flange portion, wherein the heights are measured from the inner surface of the second end face of the battery can.

18. The structure according to any of claims 10 to 17,
wherein a height of the inner flange portion is larger than a height of an end of the inner gasket, wherein the heights are measured from the inner surface of the second end face of the battery can.

19. The structure according to any of the preceding claims,
wherein a height of the inner flange portion is 0.5 mm to 3.0 mm from the inner surface of the second end face of the battery can.

20. The structure according to any of the preceding claims,
wherein a height of the electrode terminal between an outer surface of the outer flange portion to a surface of the flat portion is 4 mm to 7 mm.

21. The structure according to any of the preceding claims,
wherein a height of the outer flange portion is 0.8 mm or more from the outer surface of the second end face of the battery can.

22. The structure according to any of claims 10 to 21,
wherein at least a portion of the outer gasket is exposed to the outside of the outer flange portion, and
wherein an exposure width of the outer gasket measured in a direction parallel to the outer surface of the second end face of the battery can is 0.1 mm to 1 mm.

23. The structure according to any of claims 10 to 22,
wherein a radius from a center of the body portion to an edge of the outer flange portion is 10% to 70% of a radius of the second end face of the battery can.

24. The structure according to any of the preceding claims,
wherein a radius of the flat portion is 4% to 30% of a radius of the second end face of the battery can.

25. The structure according to any of claims 10 to 24,
wherein when a ratio of thickness change at a maximum compression point compared to a thickness before compression of the gasket is defined as a compression ratio, the compression ratio of the inner gasket is 30% to 90%, or 50% to 90%.

26. The structure according to any of claims 10 to 25,
wherein the inner gasket includes polybutylene terephthalate, polyethylene fluoride, or polypropylene.

27. A cylindrical battery cell, comprising:

an electrode assembly comprising a first electrode plate, a second electrode plate and a separator interposed therebetween, wherein the electrode assembly is wound such to have a first end face and a second end face opposite to each other, wherein the first electrode plate has an uncoated portion arranged at the first end face of the electrode assembly and the second electrode plate has an uncoated portion arranged at the second end face of the electrode assembly, wherein the uncoated portions extend beyond the separator;

a cylindrical battery can accommodating the electrode assembly and electrically connected to the first electrode plate, the battery can having an open first end face and a second end face opposite to each other;
an electrode terminal passing through a perforation hole formed in the second end face of the battery can and electrically connected to the second electrode plate;
wherein the electrode terminal includes:

- a body portion passing through the perforation hole;
- an outer flange portion extending from the body portion along an outer surface of the second end face of the battery can;
- an inner flange portion arranged inside the battery can and extending outwardly from the body portion; and
- a flat portion arranged in the battery can and surrounded by the inner flange portion;

a gasket interposed between the electrode terminal and the perforation hole; and
a sealing body closing the first end face of the battery can.

28. The cylindrical battery cell according to claim 27,

wherein the battery can includes a beading portion formed by pressing a sidewall of the battery can inwardly at a position proximal to the first end face of the battery can, and
wherein the sealing body includes a cap plate and a sealing gasket interposed between the cap plate and the first end face of the battery can.

29. The cylindrical battery cell according to claim 28, wherein the battery can further includes a crimping portion extended and bent into the inside of the battery can and configured to surround and fix the edge of the cap plate together with the sealing gasket.

30. The cylindrical battery cell according to claim 28 or 29,
wherein the cap plate includes a vent notch configured to rupture when a pressure inside the battery can exceeds a threshold.

31. The cylindrical battery cell according to claim 30, wherein the threshold is in a range of 15 kgf/cm$^2$ to 35 kgf/cm$^2$.

32. The cylindrical battery cell according to any of claims 28 to 31, further comprising:

a first current collecting plate coupled to the uncoated portion of the first electrode plate,

wherein at least an edge part of the first current collecting plate is not in physical contact with the uncoated portion of the first electrode plate, is interposed between the beading portion and the sealing gasket and is fixed by the crimping portion.

33. The cylindrical battery cell according to claim 32, wherein at least an edge part of the first current collecting plate is fixed to an inner surface of the beading portion adjacent to the crimping portion by welding.

34. The cylindrical battery cell according to any of claims 27 to 33, further comprising:

a second current collecting plate coupled to the uncoated portion of the second electrode plate, wherein at least a part of the second current collecting plate is coupled to the flat portion of the electrode terminal.

35. The cylindrical battery cell according to claim 34,

wherein the second current collecting plate and the flat portion of the electrode terminal are coupled to each other by welding, and
wherein the second current collecting plate and the flat portion of the electrode terminal are welded such to result in a tensile strength of 2 kgf or more.

36. The cylindrical battery cell according to claim 35, wherein a equivalent diameter of a welding pattern exposed on a surface of the second current collecting plate is 2 mm or more.

37. The cylindrical battery cell according to any of claims 27 to 36,
wherein a diameter of the flat portion of the electrode terminal is 3 mm to 14 mm.

38. The cylindrical battery cell according to any of claims 35 to 37,
wherein a ratio of an area of a welding pattern exposed on a surface of the second current collecting plate to an area of the flat portion of the electrode terminal is 2.04% to 44.4%.

39. The cylindrical battery cell according to any of claims 34 to 38, further comprising:
an insulator interposed between the second current collecting plate and an inner circumference of the second end face of the battery can and between an inner circumference of a sidewall of the battery can and the electrode assembly.

40. The cylindrical battery cell according to claim 39,

wherein the insulator has a welding hole formed to expose the flat portion of the electrode terminal to the second current collecting plate, and wherein the insulator covers the second current collecting plate and an edge of the second end face of the electrode assembly.

41. The cylindrical battery cell according to claim 39 or 40,
    wherein a height of the flat portion of the electrode terminal from the inner surface of the second end face of the battery can is equal to or smaller than a thickness of the insulator.

42. The cylindrical battery cell according to any of claims 27 to 41, wherein the gasket includes:

    an outer gasket interposed between the outer flange portion and the outer surface of the bottom of the battery can; and
    an inner gasket interposed between the inner flange portion and the inner surface of the bottom of the battery can.

43. The cylindrical battery cell according to claim 42, wherein an end of the inner gasket is exposed to the outside of the inner flange portion.

44. The cylindrical battery cell according to claim 40, wherein the welding hole exposes the flat portion of the electrode terminal and the inner flange portion.

45. The cylindrical battery cell according to claim 44, wherein the welding hole further exposes the inner gasket.

46. The cylindrical battery cell according to any of claims 27 to 45, further comprising:

    a first bus bar terminal electrically coupled to the electrode terminal; and
    a second bus bar terminal electrically coupled to the outer surface of the second end face of the battery can.

47. The cylindrical battery cell according to claim 46,

    wherein the first bus bar terminal lies on the electrode terminal to form a first overlapping region, and the second bus bar terminal lies on the outer surface of the bottom of the battery can to form a second overlapping region, and
    wherein a diameter of the electrode terminal and a width of the outer surface of the bottom of the battery can satisfy the following relational expression,

$$W_1 \leq E_1 \leq D - 2R_d - 2G - 2W_2$$

$$E_2 = 0.5 \cdot (D - 2R_d - 2G - E_1)$$

wherein $E_1$ is a diameter of the electrode terminal, $E_2$ is a width of an exposed surface parallel to a surface of the electrode terminal in the outer surface of the bottom of the battery can, D is an outer diameter of the battery can, $R_d$ is a width of a round region at an edge of the battery can measured on a plane, G is an exposure width of the outer gasket through an edge of the electrode terminal, $W_1$ is a maximum value among distances between any two points selected in an edge of the first overlapping region, and $W_2$ is a maximum value among distances between two points where a plurality of linear lines passing through the center of the electrode terminal meet an edge of the second overlapping region.

48. The cylindrical battery cell according to any of claims 27 to 47,
    wherein a ratio obtained by dividing a diameter of the cylindrical battery cell by its height is greater than 0.4.

49. A battery pack, comprising multiple cylindrical battery cells according to any one of claims 27 to 48.

50. The battery pack according to claim 49,

    wherein the multiple cylindrical battery cells are arranged in a columns, and
    wherein cylindrical battery cells are arranged such that respective electrode terminals and second end faces of the battery cans are on top.

51. The battery pack according to claim 50, further comprising:

    multiple bus bars configured to connect the multiple cylindrical battery cells in series and/or in parallel,
    wherein the multiple bus bars are disposed above the multiple cylindrical battery cells,
    wherein each bus bar includes:

    - a body portion configured to extend between electrode terminals of adjacent cylindrical battery cells;
    - multiple first bus bar terminals each configured to extend in one side direction from the body portion and electrically coupled to the electrode terminal of the cylindrical battery cell located in the one side direction; and

- multiple second bus bar terminals each configured to extend in the other side direction from the body portion and electrically coupled to the outer surface of the bottom of the battery can of the cylindrical battery cell located in the other side direction.

52. The battery pack according to claim 51, wherein an AC resistance of the cylindrical battery cell measured between the electrode terminal and the outer surface of the bottom of the battery can is 4 milliohms or less.

53. A vehicle, comprising at least one battery pack according to any one of claims 49 to 52.

**FIG. 1**

WINDING
DIRECTION

11   10   12

Z
X

FIG. 2

EP 4 311 013 A2

32

**FIG. 3**

**FIG. 4**

**FIG. 5**

**FIG. 6a**

**FIG. 6b**

**FIG. 6c**

**FIG. 7a**

**FIG. 7b**

## FIG. 8

**FIG. 9**

**FIG. 10a**

**FIG. 10b**

**FIG. 11**

**FIG. 12a**

**FIG. 12b**

**FIG. 12c**

**FIG. 13**

**FIG. 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6677082 B

- US 6680143 B